(19)

Europäisches
Patentamt
European
Patent Office
Office européen
des brevets

(11) **EP 4 492 742 A1**

(12) **EUROPEAN PATENT APPLICATION**
published in accordance with Art. 153(4) EPC

(43) Date of publication:
**15.01.2025 Bulletin 2025/03**

(21) Application number: **23778141.4**

(22) Date of filing: **27.03.2023**

(51) International Patent Classification (IPC):
**H04L 27/26** (2006.01)

(52) Cooperative Patent Classification (CPC):
**H04L 27/26**

(86) International application number:
**PCT/CN2023/084206**

(87) International publication number:
**WO 2023/185776 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 CN 202210335881**

(71) Applicant: **Huawei Technologies Co., Ltd.
Shenzhen, Guangdong 518129 (CN)**

(72) Inventors:
• **ZHANG, Gongzheng
  Shenzhen, Guangdong 518129 (CN)**

• **XU, Chen
  Shenzhen, Guangdong 518129 (CN)**
• **LI, Rong
  Shenzhen, Guangdong 518129 (CN)**
• **DU, Yinggang
  Shenzhen, Guangdong 518129 (CN)**
• **YAN, Min
  Shenzhen, Guangdong 518129 (CN)**

(74) Representative: **Maiwald GmbH
Engineering
Elisenhof
Elisenstrasse 3
80335 München (DE)**

(54) **DATA PROCESSING METHOD, APPARATUS AND SYSTEM**

(57)    This application provides a data processing method, an apparatus, and a system, to dynamically adjust modulation based on modulation condition information, thereby improving communication performance. The method includes: A transmitting apparatus obtains a to-be-modulated bit(s) and modulation condition information MCI; and obtains a first modulated signal based on the to-be-modulated bit(s), the MCI, and a first neural network, and outputs the first modulated signal. Correspondingly, a receiving apparatus obtains the first modulated signal, and demodulates the first modulated signal. The to-be-modulated bit(s) includes $N \times M$ bits, M is a modulation order, N is a quantity of first modulation symbols included in the first modulated signal, and both N and M are positive integers.

FIG. 10

**Description**

This application claims priority to Chinese Patent Application No. 202210335881.7, filed with the China National Intellectual Property Administration on March 31, 2022 and entitled "DATA PROCESSING METHOD, APPARATUS, AND SYSTEM", which is incorporated herein by reference in its entirety.

**TECHNICAL FIELD**

Embodiments of this application relate to the communication field, and in particular, to a data processing method, an apparatus, and a system.

**BACKGROUND**

In wireless transmission, after receiving data from a media access control (media access control, MAC) layer, a physical (physical, PHY) layer of a transmitting end performs a series of processing on the data, and finally sends the data in a form of an electromagnetic wave. After receiving the electromagnetic wave over an air interface, a receiving end performs a series of processing to obtain a data bit.

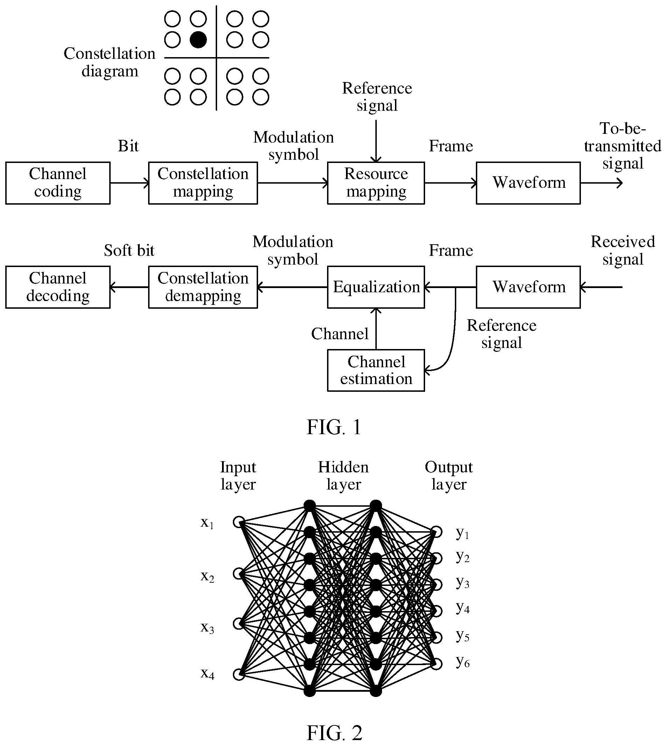

For example, a conventional transceiver processing procedure is shown in FIG. 1. The transmitting end performs constellation mapping (or modulation) on a bit obtained by channel coding, to obtain a modulation symbol. Subsequently, resource mapping is performed on both the modulation symbol and a reference signal, to obtain a data frame. Finally, a to-be-transmitted signal is obtained through waveform shaping. After performing waveform processing on a received signal, the receiving end obtains the data frame. Subsequently, channel estimation is performed based on the predefined reference signal, and channel equalization is performed to obtain the modulation symbol. Finally, constellation demapping (or demodulation) is performed on the symbol obtained by equalization, to obtain a soft bit for channel decoding.

In the conventional processing procedure shown in FIG. 1, a constellation diagram used for the constellation mapping is usually pre-designed. However, the pre-designed constellation diagram may not match all communication scenarios. Therefore, for a mismatched scenario, there may be a loss of communication performance.

**SUMMARY**

This application provides a data processing method, an apparatus, and a system, to dynamically adjust modulation based on modulation condition information, thereby improving communication performance.

According to a first aspect, a data processing method is provided. The method may be performed by a transmitting apparatus, or may be performed by a component of the transmitting apparatus, for example, a processor, a chip, or a chip system of the transmitting apparatus, or may be implemented by a logical module or software that can implement all or some functions of the transmitting apparatus. The method includes: obtaining to-be-modulated bit(s) and modulation condition information MCI; and obtaining a first modulated signal based on the to-be-modulated bit(s), the MCI, and a first neural network, and outputting the first modulated signal. The to-be-modulated bit(s) includes $N \times M$ bits, M is a modulation order, N is a quantity of first modulation symbols included in the first modulated signal, and both M and N are positive integers.

Based on this solution, the modulation condition information is introduced, so that dynamic adjustment can be performed on modulation based on the modulation condition information. For example, for a same bit, obtained modulation symbols may also vary with different modulation condition information. This implements the dynamic adjustment on the modulation. Because the dynamic adjustment on the modulation can be implemented, various communication scenarios may be matched more flexibly, to improve communication performance.

In a possible design, the MCI indicates a mapping relationship between a bit and a modulation symbol. Alternatively, the MCI is used to determine a mapping relationship between a bit and a modulation symbol.

Based on the possible design, when the to-be-modulated bit(s) is mapped to the modulation symbol, for the same bit, the obtained modulation symbols may also vary with different MCI, thereby implementing the dynamic adjustment on the modulation.

In a possible design, the MCI is determined based on first information, the first information includes environment information and/or requirement information, the environment information indicates a channel environment, and the requirement information indicates a requirement on communication performance.

Based on the possible design, when the modulation condition information is determined by the environment information indicating the channel environment and/or the requirement information indicating the requirement on the communication performance, the dynamic adjustment on the modulation may be implemented based on the channel environment and/or the requirement on the communication performance, so that mapping between the bit and the modulation symbol better meets a channel condition or a performance requirement. This further improves the communication performance.

In a possible design, the environment information includes at least one of the following: a channel response, a channel Doppler spread, a channel delay spread, an equivalent signal-to-noise ratio, a carrier frequency, or a channel quality indicator.

In a possible design, that the MCI is determined based on first information includes: The MCI is obtained by quantizing the first information. Alternatively, the MCI is an output of a second neural network, and an input of the second neural network is the first information.

In a possible design, the method further includes: sending second information. The second information indicates the first neural network.

Based on the possible design, the transmitting apparatus sends the second information indicating the first neural network, so that a receiving apparatus can determine a third neural network based on the second information, and the receiving apparatus obtains a third neural network corresponding to the first neural network, to be specific, the receiving apparatus and the transmitting apparatus use a same mapping relationship between a bit and a modulation symbol, so that the receiving apparatus can perform demodulation in a mapping manner at a transmitting end, to improve accuracy of demodulation and improve communication efficiency.

In a possible design, the second information includes a structure parameter and/or a weight parameter of the first neural network.

Based on the possible design, the receiving apparatus can restore the first neural network based on the structure parameter and/or the weight parameter, to train the third neural network corresponding to the first neural network, and perform demodulation by using the third neural network, to improve the accuracy of the demodulation and further improve the communication efficiency.

In a possible design, the first neural network is a first fully connected neural network. An input of the first fully connected neural network is the to-be-modulated bit(s) and the MCI, and an output of the first fully connected neural network is the first modulated signal.

Based on the possible design, the MCI is used as the input of the first fully connected neural network. When to-be-modulated bit(s)s are the same, different MCI may correspond to different outputs, to be specific, correspond to different constellations and modulation symbols, to implement the dynamic adjustment on the modulation.

In a possible design, the MCI includes N1 pieces of sub-MCI. The input of the first fully connected neural network is one of the N1 pieces of sub-MCI and a bit corresponding to an $n^{th}$ first modulation symbol in the N first modulation symbols, where N1 is a positive integer less than or equal to N, and n=0, 1, ..., and N-1.

In a possible design, the first neural network is a fourth neural network. The fourth neural network is configured to obtain a power weight based on the MCI. The first modulated signal is obtained by adding at least one second modulation symbol and a pilot based on the power weight, and the at least one second modulation symbol is determined based on the to-be-modulated bit(s).

Based on the possible design, the pilot may be superposed on the at least one second modulation symbol in a power superposition manner. Therefore, time-frequency resources occupied by the pilot may be reduced, to be specific, time-frequency resource overheads are reduced. In addition, for different MCI, obtained power weights may be different. Further, the first modulated signals obtained by adding the at least one second modulation symbol and the pilot may also be different, to implement the dynamic modulation on the modulation.

In a possible design, the first neural network is a first convolutional neural network. The MCI is used to determine a scaling factor of an output channel of a convolutional layer in the first convolutional neural network. An input of the first convolutional neural network includes data information, and an output of the first convolutional neural network is the first modulated signal. The data information is the to-be-modulated bit(s), or the data information includes at least one second modulation symbol, and the at least one second modulation symbol is determined based on the to-be-modulated bit(s).

Based on the possible design, the MCI is introduced to adjust an output of the convolutional layer. When to-be-modulated bit(s)s are the same, different MCI may correspond to different outputs, to be specific, correspond to different constellations and modulation symbols, to implement the dynamic adjustment on the modulation.

In a possible design, when the data information is the to-be-modulated bit(s), the first convolutional neural network includes M first input channels. An input of an $m^{th}$ first input channel includes an $m^{th}$ bit corresponding to each of the N first modulation symbols, where m=0, 1, ..., and M-1.

In a possible design, the input of the first convolutional neural network further includes a pilot.

Based on the possible design, a transmitting end introduces the pilot during modulation, so that a receiving end can perform channel estimation based on the pilot while implementing the dynamic adjustment on the modulation, to improve demodulation performance of the receiving end, and further improve the communication efficiency.

In a possible design, that the MCI is used to determine a scaling factor of an output channel of a convolutional layer in the first convolutional neural network includes: The scaling factor of the output channel of the convolutional layer in the first convolutional neural network is an output of a fifth neural network, and an input of the fifth neural network is the MCI.

Based on the possible design, the output of the convolutional layer is adjusted by using the MCI. For different MCI, the obtained scaling factors of the output channel of the convolutional layer may also be different. Further, for the same to-be-modulated bit(s), outputs of the convolutional neural network may also be different, to implement the dynamic adjustment on the modulation.

In a possible design, the first neural network is a first converter neural network. The first converter neural network is configured to generate the first modulated signal based on data information and the MCI. The data information is the to-be-modulated bit(s), or the data information includes at least one second modulation symbol, and the at least one second modulation symbol is determined based on the to-be-modulated bit(s).

Based on the possible design, the MCI is used as an input of the first converter neural network. When to-be-modulated bit(s)s are the same, different MCI may correspond to different outputs, to be specific, correspond to different constellations and modulation symbols, to implement the dynamic adjustment on the modulation.

In a possible design, the at least one second modulation symbol is an output of a second fully connected neural network, and an input of the second fully connected neural network is the to-be-modulated bit(s).

In a possible design, the first neural network is a first recurrent neural network, and the MCI is used to initialize a hidden state of the first recurrent neural network. An input of the first recurrent neural network is the to-be-modulated bit(s), and an output of the first recurrent neural network is the first modulated signal.

Based on the possible design, the hidden state of the first recurrent neural network is initialized by using the MCI. For different MCI, obtained initial hidden states of the first recurrent neural network may be different. For the same to-be-modulated bit(s), output modulation symbols may also be different because the initial hidden states are different, to implement the dynamic adjustment on the modulation.

In a possible design, the first neural network is a second recurrent neural network. An input of the second recurrent neural network is the to-be-modulated bit(s) and the MCI, and an output of the second recurrent neural network is the first modulated signal.

Based on the possible design, the MCI is used as the input of the second recurrent neural network. When to-be-modulated bit(s)s are the same, different MCI may correspond to different outputs, to be specific, correspond to different constellations and modulation symbols, to implement the dynamic adjustment on the modulation.

In a possible design, the MCI includes N2 pieces of sub-MCI. The input of the second recurrent neural network is one of the N2 pieces of sub-MCI and a bit corresponding to an $n^{th}$ first modulation symbol in the N first modulation symbols, where N2 is a positive integer less than or equal to N, and n=0, 1, ..., and N-1.

According to a second aspect, a data processing method is provided. The method may be performed by a receiving apparatus, or may be performed by a component of the receiving apparatus, for example, a processor, a chip, or a chip system of the receiving apparatus, or may be implemented by a logical module or software that can implement all or some functions of the receiving apparatus. The method includes: obtaining a first modulated signal and modulation condition information MCI, and demodulating the first modulated signal based on the MCI and a third neural network. The first modulated signal includes N first modulation symbols, and N is a positive integer.

Based on this solution, the modulation condition information is introduced into a receiving end for demodulation, and dynamic adjustment can be performed on reception based on the modulation condition information. For example, for a same modulation symbol, obtained modulation results may also vary with different modulation condition information. This implements the dynamic adjustment on the reception. Because the dynamic adjustment on the reception can be implemented, various communication scenarios may be matched more flexibly, to improve communication performance.

In a possible design, the MCI is used to adjust a mapping relationship between a bit and a modulation symbol.

In a possible design, the MCI is determined based on first information, the first information includes environment information and/or requirement information, the environment information indicates a channel environment, and the requirement information indicates a requirement on communication performance.

In a possible design, the environment information includes at least one of the following: a channel response, a channel Doppler spread, a channel delay spread, an equivalent signal-to-noise ratio, a carrier frequency, or a channel quality indicator.

In a possible design, that the MCI is determined based on first information includes: the MCI is obtained by quantizing the first information, or the MCI is an output of a second neural network, and an input of the second neural network is the first information.

In a possible design, the method further includes: receiving second information, and determining the third neural network based on the second information. The second information indicates a first neural network, and the first neural network is configured to generate the first modulated signal.

In a possible design, the second information includes a structure parameter and/or a weight parameter of the first neural network.

In a possible design, the third neural network is a second convolutional neural network. An input of the second convolutional neural network is the first modulated signal, and an output of the second convolutional neural network is an LLR sequence. The MCI is used to determine a scaling factor of an output channel of a convolutional layer in the second convolutional neural network.

In a possible design, the second convolutional neural network includes M output channels, where an output of an $m^{th}$ output channel includes an LLR corresponding to an $m^{th}$ bit in each of N bit groups.

In a possible design, the third neural network is a second converter neural network, and the second converter neural network is configured to generate an LLR sequence based on the first modulated signal and the MCI.

In a possible design, the second converter neural network includes a fourth shared mapping layer, a second interaction layer, and a sixth shared mapping layer. The fourth shared mapping layer is configured to obtain, based on the first modulated signal, a vector corresponding to the first modulated signal. The second interaction layer is configured to obtain a second interaction result based on the vector corresponding to the first modulated signal and a vector corresponding to the MCI; and the vector corresponding to the MCI is obtained by a fifth mapping layer based on the MCI. The sixth shared mapping layer is configured to generate the LLR sequence based on the second interaction result.

In a possible design, the third neural network is a third recurrent neural network. The MCI is used to initialize a hidden state of the third recurrent neural network. An input of the third recurrent neural network is a modulation symbol, and an output of the third recurrent neural network is an LLR sequence.

In a possible design, the third neural network is a fourth recurrent neural network. An input of the fourth recurrent neural network is the modulation symbol and the MCI, and an output of the fourth recurrent neural network is an LLR sequence

For effects brought by any possible design in the second aspect, refer to technical effects brought by a corresponding design in the first aspect. Details are not described herein again.

According to a third aspect, a communication apparatus is provided, configured to implement the foregoing various methods. The communication apparatus may be the transmitting apparatus in the first aspect, or a device including the transmitting apparatus, or an apparatus included in the transmitting apparatus, for example, a chip. Alternatively, the communication apparatus may be the receiving apparatus in the second aspect, or a device including the receiving apparatus, or an apparatus included in the receiving apparatus, for example, a chip. The communication apparatus includes a corresponding module, unit, or means (means) for implementing the foregoing method. The module, unit, or means may be implemented by hardware or software, or by hardware executing corresponding software. The hardware or the software includes one or more modules or units corresponding to the foregoing functions.

In a possible design, the communication apparatus may include a processing module. Further, the communication apparatus may further include a transceiver module. The processing module may be configured to implement a processing function in any one of the foregoing aspects and any possible implementation of the foregoing aspects. The transceiver module may also be referred to as a transceiver unit, and is configured to implement the transmitting and/or receiving function in any one of the foregoing aspects and any possible implementation of the foregoing aspects. The transceiver module may include a transceiver circuit, a transceiver machine, a transceiver, or a communication interface.

In a possible design, the transceiver module includes a transmitting module and a receiving module, respectively configured to implement the transmitting function and the receiving function in any one of the foregoing aspects and any possible implementation of the foregoing aspects.

When the communication apparatus is configured to implement a function of the transmitting apparatus, in a possible implementation, the processing module is configured to obtain to-be-modulated bit(s) and modulation condition information MCI; the processing module is further configured to obtain a first modulated signal based on the to-be-modulated bit(s), the MCI, and a first neural network, where the to-be-modulated bit(s) includes N $\times$ M bits, M is a modulation order, and N is a quantity of first modulation symbols included in the first modulated signal; and the processing module is further configured to output the first modulated signal.

In a possible implementation, the transceiver module is configured to send second information, where the second information indicates the first neural network.

When the communication apparatus is configured to implement a function of the receiving apparatus, in a possible implementation, the processing module is configured to obtain a first modulated signal and modulation condition information MCI, where the first modulated signal includes N first modulation symbols, and N is a positive integer; and the processing module is further configured to demodulate the first modulated signal based on the MCI and a third neural network.

In a possible implementation, the transceiver module is configured to receive second information, where the second information indicates a first neural network, and the first neural network is configured to generate the first modulated signal; and the processing module is further configured to determine the third neural network based on the second information.

According to a fourth aspect, a communication apparatus is provided, including a processor and a memory, where the memory is configured to store computer instructions; and when the processor executes the instructions, the communication apparatus is enabled to perform the method according to any one of the foregoing aspects. The communication apparatus may be the transmitting apparatus in the first aspect, or a device including the transmitting apparatus, or an apparatus included in the transmitting apparatus, for example, a chip. Alternatively, the communication apparatus may be the receiving apparatus in the second aspect, or a device including the receiving apparatus, or an apparatus included in the receiving apparatus, for example, a chip.

According to a fifth aspect, a communication apparatus is provided, including a processor and a communication interface, where the communication interface is configured to communicate with a module outside the communication apparatus, and the processor is configured to execute a computer program or instructions, to enable the communication apparatus to perform the method according to any one of the foregoing aspects. The communication apparatus may be the transmitting apparatus in the first aspect, or a device including the transmitting apparatus, or an apparatus included in the transmitting apparatus, for example, a chip. Alternatively, the communication apparatus may be the receiving apparatus in the second aspect, or a device including the receiving apparatus, or an apparatus included in the receiving apparatus, for example, a chip.

According to a sixth aspect, a communication apparatus is provided, including a logic circuit and an interface circuit, where the interface circuit is configured to input and/or output information, and the logic circuit is configured to perform the method according to any one of the foregoing aspects, generate the information output by the interface circuit, and/or perform processing based on the information input by the interface circuit. The communication apparatus may be the transmitting apparatus in the first aspect, or a device including the transmitting apparatus, or an apparatus included in the transmitting apparatus, for example, a chip. Alternatively, the communication apparatus may be the receiving apparatus in the second aspect, or a device including the receiving apparatus, or an apparatus included in the receiving apparatus, for example, a chip.

When the communication apparatus is configured to implement a function of the transmitting apparatus, in a possible design, the output information is a first modulated signal, where the first modulated signal includes N first modulation symbols.

In a possible design, the output information is second information, where the second information indicates a first neural network, and the first neural network is configured to generate the first modulated signal.

When the communication apparatus is configured to implement a function of the receiving apparatus, in a possible design, the input information is a first modulated signal, where the first modulated signal includes N first modulation symbols. The performing processing based on the input information may include: demodulating the first modulated signal based on the MCI and a third neural network.

In a possible design, the input information is the second information, where the second information indicates a first neural network, and the first neural network is configured to generate the first modulated signal. The performing processing based on the input information may include: determining the third neural network based on the second information.

According to a seventh aspect, a communication apparatus is provided, including an interface circuit and a processor, where the interface circuit is a code/data read/write interface circuit, and the interface circuit is configured to receive computer-executable instructions (where the computer-executable instructions are stored in a memory, may be directly read from the memory, or may pass through another component) and transmit the computer-executable instructions to the processor; and the processor is configured to execute the computer-executable instructions, to enable the communication apparatus to perform the method according to any one of the foregoing aspects. The communication apparatus may be the transmitting apparatus in the first aspect, or a device including the transmitting apparatus, or an apparatus included in the transmitting apparatus, for example, a chip. Alternatively, the communication apparatus may be the receiving apparatus in the second aspect, or a device including the receiving apparatus, or an apparatus included in the receiving apparatus, for example, a chip.

According to an eighth aspect, a communication apparatus is provided, including at least one processor, where the processor is configured to execute a computer program or instructions, to enable the communication apparatus to perform the method according to any one of the foregoing aspects. The communication apparatus may be the transmitting apparatus in the first aspect, or a device including the transmitting apparatus, or an apparatus included in the transmitting apparatus, for example, a chip. Alternatively, the communication apparatus may be the receiving apparatus in the second aspect, or a device including the receiving apparatus, or an apparatus included in the receiving apparatus, for example, a chip.

In a possible design, the communication apparatus includes a memory. The memory is configured to store necessary program instructions and necessary data. The memory may be coupled to the processor, or may be independent of the processor.

In a possible design, the communication apparatus may be a chip or a chip system. When the apparatus is the chip system, the chip system may include a chip, or may include a chip and another discrete component.

According to a ninth aspect, a computer-readable storage medium is provided. The computer-readable storage medium stores instructions; and when the instructions are run on a communication apparatus, the communication apparatus is enabled to perform the method according to any one of the foregoing aspects.

According to a tenth aspect, a computer program product including instructions is provided. When the computer program product runs on a communication apparatus, the communication apparatus is enabled to perform the method according to any one of the foregoing aspects.

It may be understood that, when the communication apparatus provided in any one of the third aspect to the tenth aspect is a chip, the transmitting action/function may be understood as an output, and the receiving action/function may be understood as an input.

For technical effects brought by any design manner of the third aspect to the tenth aspect, refer to the technical effects brought by the different design manners of the first aspect. Details are not described herein again.

According to an eleventh aspect, a communication system is provided. The communication system includes the transmitting apparatus and the receiving apparatus according to the foregoing aspects.

## BRIEF DESCRIPTION OF DRAWINGS

FIG. 1 is a diagram of a conventional transceiver processing procedure according to this application;
FIG. 2 is a diagram of a structure of a fully connected neural network according to this application;
FIG. 3 is a diagram of a structure of a convolutional neural network according to this application;
FIG. 4 is a diagram of a structure of a recurrent neural network according to this application;
FIG. 5 is a diagram of a structure of an interaction layer according to this application;
FIG. 6 is a diagram of a transceiver processing procedure according to this application;
FIG. 7 is a diagram of a structure of a communication system according to this application;
FIG. 8 is a diagram of a structure of another communication system according to this application;
FIG. 9 is a diagram of a structure of a communication apparatus according to this application;
FIG. 10 is a diagram of interaction of a data processing method according to this application;
FIG. 11 is a diagram of interaction of another data processing method according to this application;
FIG. 12 is a diagram of a data processing procedure of a transmitting apparatus based on a fully connected neural network according to this application;
FIG. 13 is a diagram of another data processing procedure of a transmitting apparatus based on a fully connected neural network according to this application;
FIG. 14 is a diagram of a data processing procedure of a transmitting apparatus based on a convolutional neural network according to this application;
FIG. 15 is a diagram of another data processing procedure of a transmitting apparatus based on a convolutional neural network according to this application;
FIG. 16 is a diagram of still another data processing procedure of a transmitting apparatus based on a convolutional neural network according to this application;
FIG. 17 is a diagram of a data processing procedure of a transmitting apparatus based on a converter neural network according to this application;
FIG. 18 is a diagram of another data processing procedure of a transmitting apparatus based on a converter neural network according to this application;
FIG. 19 is a diagram of a data processing procedure of a transmitting apparatus based on a recurrent neural network according to this application;
FIG. 20 is a diagram of another data processing procedure of a transmitting apparatus based on a recurrent neural network according to this application;
FIG. 21 is a diagram of a data processing procedure of a receiving apparatus based on a convolutional neural network according to this application;
FIG. 22 is a diagram of a data processing procedure of a receiving apparatus based on a converter neural network according to this application;
FIG. 23 is a diagram of a data processing procedure of a receiving apparatus based on a recurrent neural network according to this application;
FIG. 24 is a diagram of another data processing procedure of a receiving apparatus based on a recurrent neural network according to this application;
FIG. 25 is a diagram of a data processing procedure of a transmitting/receiving end based on a fully connected neural network and a convolutional neural network according to this application;
FIG. 26 is a diagram of another data processing procedure of a transmitting/receiving end based on a fully connected neural network and a convolutional neural network according to this application;
FIG. 27 is a diagram of a data processing procedure of a transmitting/receiving end based on a convolutional neural network according to this application;
FIG. 28 is a diagram of a data processing procedure of a transmitting/receiving end based on a converter neural network according to this application;
FIG. 29 is a diagram of a structure of a transmitting apparatus according to this application;

FIG. 30 is a diagram of a structure of a receiving apparatus according to this application; and
FIG. 31 is a diagram of a structure of another communication apparatus according to this application.

## DESCRIPTION OF EMBODIMENTS

In descriptions of this application, unless otherwise specified, "/" indicates an "or" relationship between associated objects. For example, A/B may represent A or B. In this application, "and/or" only describes an association relationship between associated objects, and represents that three relationships may exist. For example, A and/or B may represent the following three cases: A exists alone, both A and B exist, and B exists alone, where A and B may be singular or plural.

In the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. To be precise, a word such as "example" or "for example" is used to present a related concept in a specific manner for ease of understanding.

It may be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect, or in some scenarios, combine with other features based on requirements. Correspondingly, the apparatus provided in embodiments of this application may also correspondingly implement these features or functions. Details are not described herein again.

In this application, unless otherwise specified, for same or similar parts in the embodiments, refer to each other. In implementations of this application, unless otherwise stated or there is a logic conflict, terms and/or descriptions in different implementations are consistent and may be mutually referenced, and technical features in different implementations may be combined based on an internal logical relationship thereof, to form a new implementation. The following implementations of this application are not intended to limit the protection scope of this application.

For ease of understanding the technical solutions in embodiments of this application, technologies related to this application are first briefly described as follows.

1. Fully connected neural network

The fully connected neural network is also referred to as a multilayer perceptron (multilayer perceptron, MLP). The fully connected neural network includes one input layer, one output layer, and at least one hidden layer. Each layer includes one or more neurons, and neurons at two adjacent layers are connected to each other. The neuron may also be referred to as a node.

For example, in which the fully connected neural network includes two hidden layers. As shown in FIG. 2, a leftmost layer is an input layer, and includes four neurons. A rightmost layer is an output layer, and includes six neurons. Two layers in the middle are two hidden layers.

For neurons at two adjacent layers in the fully connected neural network, an output A of a neuron at a lower layer is a value obtained by performing an activation function on a weighted sum of all neurons $x$ that are at an upper layer and that are connected to the neuron, and may be expressed as the following formula (1):

$$h = f\left(wx + b\right) \quad (1)$$

$w$ is a weight matrix, $b$ is a bias vector, and $f$ is the activation function. Based on this, an output of the fully connected neural network may be expressed in a recursive form as follows:

$$y = f_n\left(w_n f_{n-1}\left(\ldots\right) + b_n\right) \quad (2)$$

2. Convolutional neural network (convolutional neural network, CNN)

The convolutional neural network is a forward neural network that can be based on a convolution operation. The convolutional neural network includes an input layer, a hidden layer, and an output layer. Further, the hidden layer may include a convolutional layer.

The input layer may include at least one input channel, and the output layer may include at least one output channel. The convolutional layer may include at least one convolution kernel (or referred to as a filter (filter)). At the convolutional layer, a convolution operation is performed on an input signal by using the convolution kernel, to obtain an output signal. Generally, the convolutional neural network may include a plurality of convolutional layers. The convolutional neural network including the plurality of convolutional layers may be referred to as a multilayer convolutional neural network.

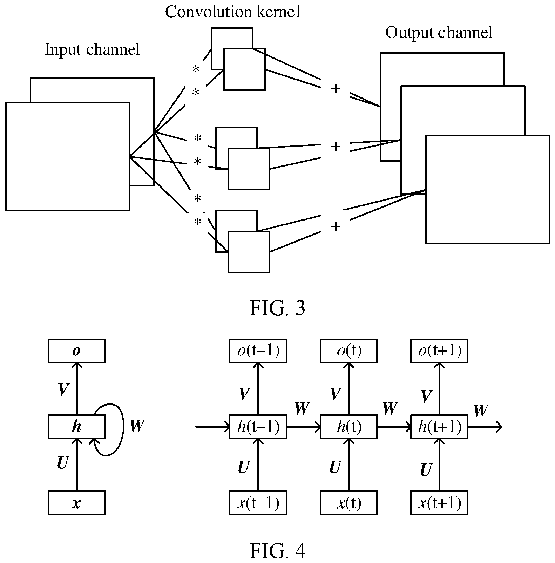

For example, FIG. 3 is a diagram of a structure of a convolutional neural network including one convolutional layer. For one convolutional layer, a relationship between an input signal and an output signal may be expressed as:

$$h_j = f\left(w_{ij} * x_i + b_j\right) \quad (3)$$

$h_j$ is the output signal, $W_{ij}$ is a convolution kernel from an input channel i to an output channel $j$, and may also be referred to as a weight matrix from the input channel i to the output channel $j$, $x_i$ is the input signal, * represents convolution, $b_j$ is a bias vector, and f is an activation function.

3. Recurrent neural network (recurrent neural network, RNN)

The recurrent neural network is a type of neural network with a feedback structure. As shown in FIG. 4, the recurrent neural network includes an input layer, a hidden layer, and an output layer, x represents an input sequence, $h$ represents a hidden state, and $o$ represents an output sequence. $U, V,$ and $W$ are weight matrices. It may be learned from FIG. 4 that, in the recurrent neural network, an input at a moment includes an element in the input sequence and an output value of the hidden layer at a previous moment. For example, at a moment t, an input of the recurrent neural network includes an element x(t) in the input sequence and an output value h(t-1) of the hidden layer at a moment t-1.

4. Converter neural network

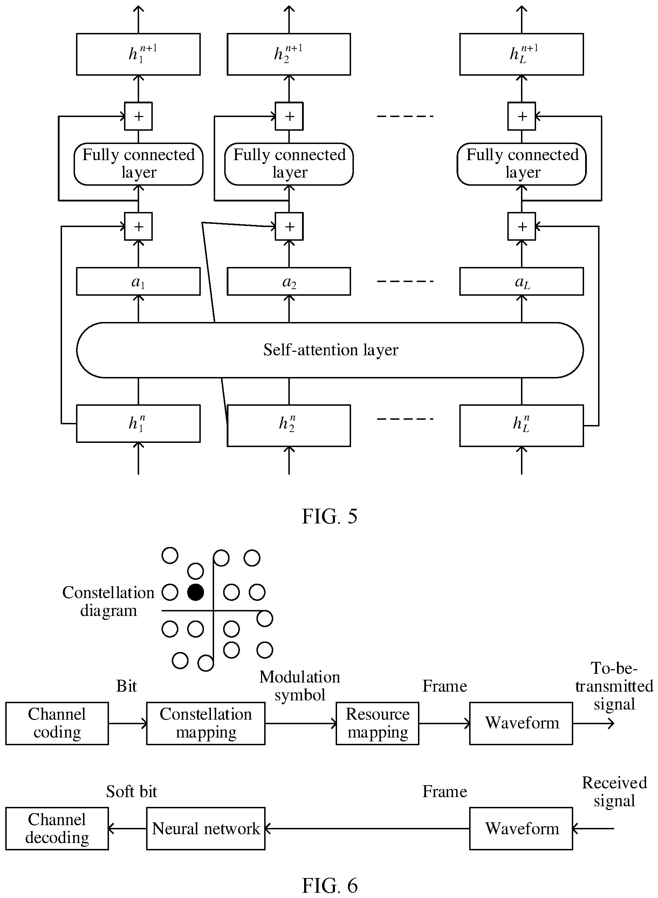

The converter neural network is a type of neural network with a self-attention structure, and may include a mapping layer, an interaction layer, and the like. Further, the interaction layer may include a multilayer structure, and layers in the multilayer structure may be the same or may be different. For example, one layer of structure included in the interaction layer may be shown in FIG. 5.

Referring to FIG. 5, the interaction layer may include a self-attention layer and a fully connected layer. An input of the self-attention layer is L to-be-processed vectors $h_{(i)}^n, i = 1, 2, \ldots, L$, where a subscript (i) represents an $i^{th}$ vector, and a superscript n represents an $n^{th}$ layer of the interaction layer. The L to-be-processed vectors implement interaction through the self-attention layer. An operation performed by the self-attention layer is shown in Formula (4):

$$Attention\left(Q, K, V\right) = softmax\left(\frac{QK^T}{\sqrt{d_k}}\right)V \quad (4)$$

$Q, K,$ and $V$ are matrices obtained by performing linear transformation on a matrix H. The matrix $H$ is a matrix including the foregoing L input vectors, that is:

$$\left(Q, K, V\right) = \left(W_Q, W_K, W_V\right) \times H \quad (5)$$

$W_Q$ is a weight matrix corresponding to the matrix $Q$, $W_K$ is a weight matrix corresponding to the matrix $K$, and $W_V$ is a weight matrix corresponding to the matrix $V$.

$d_k$ is a quantity of columns (or referred to as a vector dimension) of the matrices $Q$ and $K$. For example, dimensions of $Q$, $K$, $V$, and $H$ each may be $L \times d_k$. In addition, a dimension of the matrix $V$ may alternatively be another value. This is not limited. *softmax* is a normalized exponential function, and is a generalization of a binary classification function

$$softmax(z)_i = e^{z_i} / \sum_{j=1}^{k} e^{z_j}, i = 1, 2, \ldots k$$

sigmoid in multiclassification. For example, . *Attention* ($\bm{Q}$, $\bm{K}$, $\bm{V}$) may be understood as an overall representation of an output of the self-attention layer, and includes $L$ vectors $a_{(i)}$, $i = 1, 2, \ldots$, $L$. Then, the output of the self-attention layer may continue to be processed by the fully connected layer, to obtain an input $\bm{h}_{(i)}^{n+1}$, $i = 1, 2, \ldots, L$ of a next layer, where a subscript (i) represents an $i^{th}$ vector, and a superscript n+1 represents an $(n+1)^{th}$ layer included in the interaction layer.

It should be noted that, the structure shown in FIG. 5 is merely an example for describing the interaction layer. A specific structure of the interaction layer is not limited in this application. During actual application, the interaction layer may alternatively have another structure.

5. Constellation diagram

A constellation diagram in FIG. 1 is used as an example. The constellation diagram includes a horizontal axis, a vertical axis, and constellation points (the constellation point may alternatively be described as a symbol). For example, one circle in the constellation diagram shown in FIG. 1 represents one constellation point. Each constellation point may correspond to a plurality of bits (bits). A projection of the constellation point on the horizontal axis represents a peak amplitude of an in-phase component, and a projection of the constellation point on the vertical axis represents a peak amplitude of a quadrature component. A length of a connection line (or referred to as a vector) from the constellation point to an origin represents a peak amplitude of a signal, and an angle between the connection line and the horizontal axis represents a phase. Based on this, constellation mapping may be understood as mapping a bit to a corresponding constellation point in the constellation diagram based on the constellation diagram.

For a transceiver processing procedure in wireless transmission, in addition to the conventional procedure shown in FIG. 1, a transceiver processing procedure based on a neural network is also proposed.

For example, as shown in FIG. 6, the constellation diagram may be optimized at a transmitting end based on the neural network to obtain a special constellation, and a reference signal is removed, to improve a throughput. Correspondingly, the neural network is used at a receiving end, so that a receiver based on the neural network may implement channel estimation, equalization, and symbol demodulation by using a statistical characteristic of a signal and the like.

However, in this solution, the constellation diagram obtained through optimization is fixed, and cannot be adjusted based on an actual condition. Therefore, there may also be a performance loss in some cases.

In other words, there may be a performance loss when the fixed constellation diagram is used in wireless transmission. Based on this, this application provides a data processing method, to dynamically adjust modulation and reception based on modulation condition information, thereby improving communication performance.

Technical solutions in embodiments of this application may be applied to various communication systems, for example, 4th generation (4th generation, 4G) communication systems such as orthogonal frequency division multiple access (orthogonal frequency division multiple access, OFDMA), single carrier frequency division multiple access (single carrier FDMA, SC-FDMA), a satellite communication system, a non-terrestrial network (non-terrestrial network, NTN), an internet of things (internet of things, IoT) system, and a long term evolution (long term evolution, LTE) system, 5th generation (5th generation, 5G) communication systems such as a new radio (new radio, NR) system, or a communication system evolved after 5G.

The technical solutions in embodiments of this application may be applied to various communication scenarios, for example, may be applied to one or more of the following communication scenarios: enhanced mobile broadband (enhanced mobile broadband, eMBB), ultra reliable and low latency communication (ultra reliable and low latency communication, URLLC), machine type communication (machine type communication, MTC), massive machine type communication (massive machine type communication, mMTC), device-to-device (device-to-device, D2D), vehicle-to-everything (vehicle-to-everything, V2X), or IoT.

The foregoing communication systems applicable to this application are merely examples for description, and the communication systems applicable to this application are not limited thereto. This is uniformly described herein, and details are not described below again.

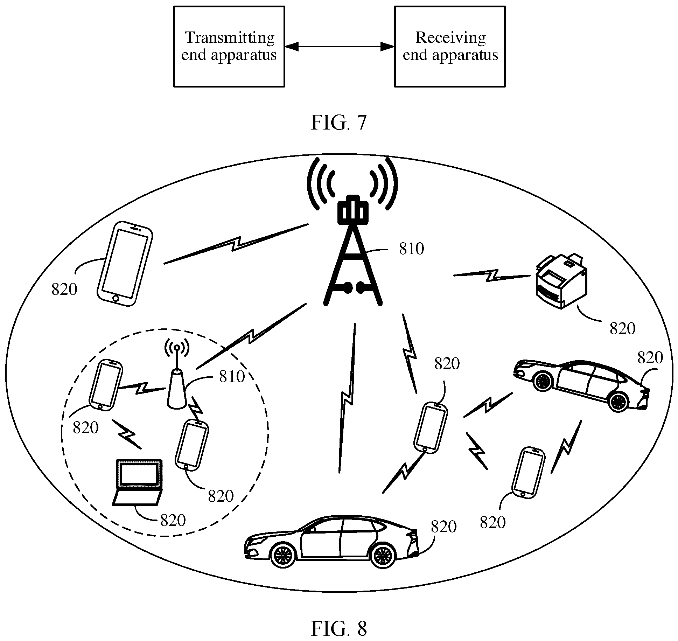

FIG. 7 is a diagram of a structure of a communication system according to this application. The communication system includes a transmitting apparatus and a receiving apparatus.

Optionally, the transmitting apparatus may be a terminal device, and correspondingly, the receiving apparatus is a network device; the transmitting apparatus may be a network device, and correspondingly, the receiving apparatus is a terminal device; both the transmitting apparatus and the receiving apparatus are terminal devices; or both the transmitting apparatus and the receiving apparatus are network devices.

For example, FIG. 8 is a diagram of a possible structure of a communication system according to this application. In FIG. 8, an example in which the communication system includes at least one network device 810 and one or more terminal devices 820 connected to the network device 810 is used for description. It should be understood that, a quantity of terminal devices and a quantity of network devices in FIG. 8 are merely examples, and there may be more or fewer terminal devices and more or fewer network devices.

For example, in the communication system shown in FIG. 8, the terminal device 820 may be used as a transmitting apparatus, and correspondingly, the network device 810 is used as a receiving apparatus; or the terminal device 820 may be used as a receiving apparatus, and correspondingly, the network device 810 is used as a transmitting apparatus.

Optionally, the network device 810 in embodiments of this application is a device that enables the terminal device 820 to access a wireless network. The network device 810 may be a node in a radio access network, and may also be referred to as a base station, or may be referred to as a radio access network (radio access network, RAN) node (or device).

For example, the network device may include an evolved NodeB (NodeB, eNB, or e-NodeB, evolutional NodeB) in a long term evolution (long term evolution, LTE) system or an LTE-advanced (LTE-Advanced, LTE-A) system, for example, a conventional macro base station eNB and a micro base station eNB in a heterogeneous network scenario. Alternatively, the network device may include a next generation NodeB (next generation NodeB, gNB) in an NR system. Alternatively, the network device may include a transmission reception point (transmission reception point, TRP), a home base station (for example, a home evolved NodeB or a home NodeB, HNB), a baseband unit (baseband unit, BBU), a baseband pool BBU pool, a wireless fidelity (wireless fidelity, Wi-Fi) access point (access point, AP), or the like. Alternatively, the network device may include a central unit (central unit, CU) and/or a distributed unit (distributed unit, DU) in a cloud radio access network (cloud radio access network, CloudRAN) system. Alternatively, the network device may include a base station in an NTN, to be specific, may be deployed on a high-altitude platform or a satellite. In the NTN, the network device may serve as a layer 1 (L1) relay (relay), may serve as a base station, may serve as a DU, or may serve as an integrated access and backhaul (integrated access and backhaul, IAB) node. Alternatively, the network device may be a device that implements a base station function in IoT, for example, a device that implements a base station function in V2X, D2D, or machine-to-machine (machine-to-machine, M2M). This is not limited in embodiments of this application.

Optionally, the base station in embodiments of this application may include various forms of base stations, for example, a macro base station, a micro base station (also referred to as a small cell), a relay station, an access point, a home base station, a TRP, a transmission point (transmission point, TP), a mobile switching center, or the like. This is not specifically limited in embodiments of this application.

Optionally, the terminal device 820 in embodiments of this application may be a device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal with a communication function in IoT, for example, a terminal in V2X (for example, a vehicle-to-everything device), a terminal in D2D communication, or a terminal in M2M communication. The terminal may be mobile or fixed.

In a possible implementation, the terminal device and the network device in embodiments of this application may have an artificial intelligence (artificial intelligence, AI) computing capability, and can be deployed with various types of neural networks, for example, can be deployed with one or more types of neural networks in this application.

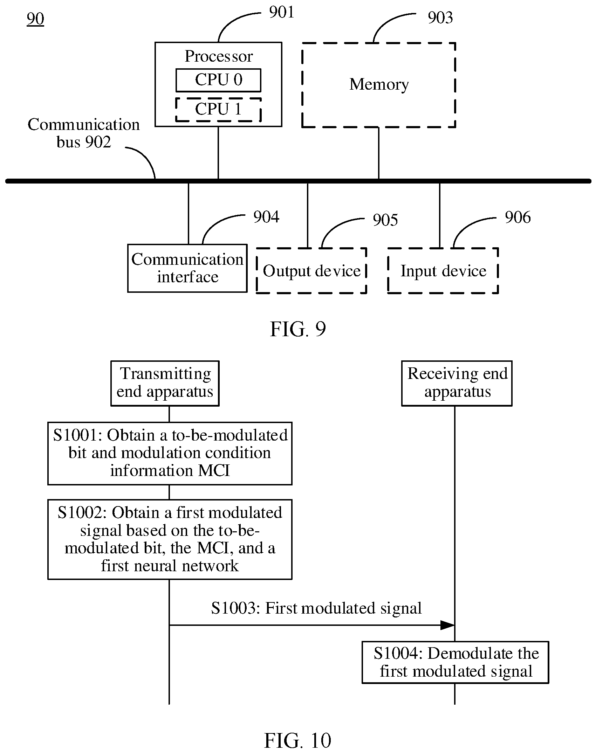

In a possible implementation, a related function of the transmitting apparatus or the receiving apparatus in this application may be implemented through a communication apparatus 90 in FIG. 9. Referring to FIG. 9, the communication apparatus 90 includes one or more processors 901. Further, the communication apparatus 90 may further include a communication bus 902 and at least one communication interface (FIG. 9 is merely an example, and an example in which the communication apparatus 90 includes a communication interface 904 and one processor 901 is used for description).

Optionally, the communication apparatus 90 may further include a memory 903.

The processor 901 may be a general-purpose central processing unit (central processing unit, CPU), a microprocessor, an application-specific integrated circuit (application-specific integrated circuit, ASIC), one or more integrated circuits configured to control program execution in solutions of this application, or a processing core configured to process data (for example, computer program instructions). The processor may be a single-core (single-CPU) processor, or may be a multi-core (multi-CPU) processor.

During specific implementation, in an embodiment, the processor 901 may include one or more CPUs, for example, a CPU 0 and a CPU 1 in FIG. 9.

The communication bus 902 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus. The communication bus 902 is configured to connect different components in the communication apparatus 90, so that the different components in the communication apparatus 90 may communicate and interact with each other.

The communication interface 904 may be a transceiver module configured to communicate with another device or a communication network. The communication network may be, for example, an Ethernet (Ethernet), a radio access network (radio access network, RAN), or a wireless local area network (wireless local area network, WLAN). For example, the communication interface 904 may be an apparatus such as a transceiver or a transceiver machine. Alternatively, the communication interface 904 may be a transceiver circuit located in the processor 901, and is configured to implement signal input and signal output of the processor.

The memory 903 may be an apparatus having a storage function. For example, the memory 903 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited. The memory may exist independently, and is connected to the processor through the communication bus 902. The memory may alternatively be integrated with the processor.

The memory 903 is configured to store computer-executable instructions for performing the solutions of this application, and the processor 901 controls execution. The processor 901 is configured to execute the computer-executable instructions stored in the memory 903, to implement the method provided in embodiments of this application.

Alternatively, optionally, in embodiments of this application, the processor 901 may perform processing-related functions in methods provided in the following embodiments of this application, and the communication interface 904 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 90 may further include an output device 905 and an input device 906. The output device 905 communicates with the processor 901, and may display information in a plurality of manners. For example, the output device 905 may be a liquid crystal display (liquid crystal display, LCD), a light emitting diode (light emitting diode, LED) display device, a cathode ray tube (cathode ray tube, CRT) display device, a projector (projector), or the like. The input device 906 communicates with the processor 901, and may receive an input of a user in a plurality of manners. For example, the input device 906 may be a mouse, a keyboard, a touchscreen device, or a sensing device.

It should be noted that, a composition structure shown in FIG. 9 does not constitute a limitation on the communication apparatus. In addition to the components shown in FIG. 9, the communication apparatus may include more or fewer components than those shown in the figure, combine some components, or have different component arrangements.

With reference to the accompanying drawings, the following describes in detail the data processing method provided in embodiments of this application by using interaction between a transmitting apparatus and a receiving apparatus as an example.

It may be understood that, in embodiments of this application, the transmitting apparatus and/or the receiving apparatus may perform some or all of the steps in embodiments of this application. These steps or operations are merely examples. In embodiments of this application, other operations or variations of various operations may be further performed. In addition, the steps may be performed in a sequence different from that presented in embodiments of this application, and not all operations in embodiments of this application may need to be performed.

FIG. 10 shows a data processing method according to an embodiment of this application. The method includes the following steps.

S1001: A transmitting apparatus obtains a to-be-modulated bit(s) and modulation condition information (modulation condition information, MCI).

Optionally, the to-be-modulated bit(s) may be a bit obtained by performing channel coding by the transmitting apparatus.

Optionally, the MCI indicates a mapping relationship between a bit and a modulation symbol. Alternatively, the MCI is used to determine a mapping relationship between a bit and a modulation symbol.

For example, that the MCI indicates a mapping relationship between a bit and a modulation symbol may be understood as: The MCI indicates a manner of mapping from the bit to the modulation symbol, or the MCI indicates a change (or adjustment) in a manner of mapping from the bit to the modulation symbol. When the MCI indicates the change in the manner of mapping from the bit to the modulation symbol, it may also be considered that the MCI is used to adjust the mapping relationship between the bit and the modulation symbol.

Optionally, because a constellation diagram may reflect the mapping relationship between the bit and the modulation symbol, in some embodiments, it may also be considered that the MCI indicates the constellation diagram, or indicates a change in the constellation diagram. Alternatively, it may also be considered that the MCI is used to determine the constellation diagram. Optionally, the MCI may be determined by first information. In other words, the MCI may be determined based on first information. The first information includes environment information and/or requirement information.

The environment information indicates a channel environment, and the channel environment may be represented by, for example, a statistical characteristic of a channel or a real-time channel characteristic. For example, the environment information may include at least one of the following: a channel response, a channel Doppler spread, a channel delay spread, an equivalent signal-to-noise ratio, a carrier frequency, or a channel quality indicator (channel quality indicator, CQI).

The requirement information indicates a requirement on communication performance. For example, the requirement information may include a peak to average power ratio (peak to average power ratio, PAPR) and the like.

Optionally, when the first information includes the environment information, the transmitting apparatus or a receiving apparatus may send a reference signal to estimate a channel parameter, to obtain the environment information.

In a possible implementation, after the first information is obtained, the first information may be quantized to obtain the MCI. In other words, the MCI is obtained by quantizing the first information. When the first information includes the environment information, the MCI is obtained by quantizing the environment information.

It may be understood that, a channel is usually quantized and mapped to obtain different feedback information, for example, a CQI and a received signal strength indicator (received signal strength indicator, RSSI). However, in this application, the MCI obtained by quantizing channel information is used to adjust the mapping relationship between the bit and the modulation symbol. A purpose of using the MCI is different from a purpose of using the CQI, the RSSI, or the like.

In another possible implementation, the first information may be processed by using a second neural network to obtain the MCI. In other words, the MCI is an output of the second neural network, and an input of the second neural network is the first information. For example, a training objective of the second neural network may be: The MCI that is output when the first information is input can enable constellation diagram (or modulation) performance to be better than performance of conventional modulation processing.

Optionally, when the first information does not exist, or the first information is not obtained, the MCI may be an agreed default value, for example, may be an all-0 vector or an all-1 vector.

It should be noted that, the MCI in this application may also have another name, for example, modulation adjustment information. A name of the MCI is not specifically limited in this application.

S 1002: The transmitting apparatus obtains a first modulated signal based on the to-be-modulated bit(s), the MCI, and a first neural network.

The to-be-modulated bit(s) includes $N \times M$ bits. M is a modulation order. N is a quantity of first modulation symbols included in the first modulated signal, and both M and N are positive integers.

For example, the to-be-modulated bit(s)s may be grouped into N bit groups, and each bit group includes M bits. The N bit groups may one-to-one correspond to the N first modulation symbols included in the first modulated signal, and a first modulation symbol corresponding to a bit group is a modulation symbol obtained by modulating the bit group.

Optionally, the $N \times M$ to-be-modulated bit(s)s may include a data bit (or referred to as an information bit) and a padding bit (for example, 0). For example, when a quantity of data bits generated by the transmitting apparatus is less than $N \times M$, 0 may be added after the data bits to obtain the $N \times M$ to-be-modulated bit(s)s.

Optionally, the first modulated signal is an output of the first neural network. The to-be-modulated bit(s) may be used as an input of the first neural network, or the to-be-modulated bit(s), after being preprocessed, may be used as an input of the first neural network. The MCI may be used as the input of the first neural network, or some parameters of the first neural network may be obtained based on the MCI. Details are described in subsequent embodiments, and details are not described herein.

It may be understood that, after step S1002, the transmitting apparatus maps the to-be-modulated bit(s) to a modulation symbol. Because the constellation diagram may reflect the mapping relationship between the bit and the modulation symbol, or the constellation diagram is used to map the bit to the modulation symbol, it may be considered that there is a constellation diagram at a transmitting end. However, due to participation of the MCI, the constellation diagram is variable and cannot be represented in a fixed form, for example, cannot be represented in a form similar to the constellation diagram shown in FIG. 1.

Based on solutions of this application, the modulation condition information is introduced, so that dynamic adjustment can be performed on modulation based on the modulation condition information. For example, for a same bit, obtained modulation symbols may also vary with different modulation condition information. This implements the dynamic adjustment on the modulation. Because the dynamic adjustment on the modulation can be implemented, various communication scenarios may be matched more flexibly, to improve communication performance.

When the modulation condition information is determined by the environment information indicating the channel environment and/or the requirement information indicating the requirement on the communication performance, based on the solutions of this application, the dynamic adjustment on the modulation may be implemented based on the channel environment and/or the requirement on the communication performance, so that mapping between the bit and the modulation symbol better meets a channel condition or a performance requirement. This further improves the communication performance.

S1003: The transmitting apparatus outputs the first modulated signal. Correspondingly, the receiving apparatus obtains the first modulated signal.

Optionally, after outputting the first modulated signal, the transmitting apparatus may generate a to-be-transmitted signal by performing processing such as inverse fast Fourier transform (inverse fast Fourier transform, IFFT) and cyclic prefix (cyclic prefix, CP) addition on the first modulated signal, and send the to-be-transmitted signal to the receiving apparatus.

Correspondingly, the receiving apparatus may receive a signal obtained by transmitting the to-be-transmitted signal through a channel, and perform operations such as CP removal and fast Fourier transform (fast Fourier transform, FFT) on the received signal to obtain the first modulated signal. That is, that the receiving apparatus obtains first modulation information may include: The receiving apparatus obtains the first modulated signal based on the received signal.

S1004: The receiving apparatus demodulates the first modulated signal.

In some embodiments, in step S 1004, the receiving apparatus may demodulate the first modulated signal based on the MCI and a third neural network.

A receiving end may first obtain the MCI, and then perform step S1004. The MCI obtained by the receiving apparatus is the same as the MCI obtained by the transmitting apparatus in step S 1001. In other words, the MCI is synchronized on the transmitting apparatus side and the receiving apparatus side.

Optionally, when one of the transmitting apparatus and the receiving apparatus is a network device, and the other of the transmitting apparatus and the receiving apparatus is a terminal device, the network device may define an MCI field in downlink control information (downlink control information, DCI), radio resource control (radio resource control, RRC) signaling, a MAC control element (control element, CE), or a broadcast message, to indicate the MCI.

Alternatively, the network device may send, to the terminal device, a parameter used to determine the MCI, for example, send the first information. In this scenario, the network device and the terminal device need to agree on a manner of determining the MCI based on the first information. For example, both the network device and the terminal device process the first information by using the second neural network to obtain the MCI, or both the network device and the terminal device quantize the first information by using a same method to obtain the MCI. Optionally, the network device may send, in the DCI, the RRC signaling, the MAC CE, or the broadcast message, the parameter used to determine the MCI.

Optionally, the terminal device may report candidate MCI to the network device. The MCI indicated by the network device may be determined by the network device with reference to the candidate MCI reported by the terminal device. In other words, the network device may determine, with reference to the candidate MCI reported by the terminal device, the MCI to be indicated to the terminal device. The MCI is determined based on conditions at both a transmitting end and a receiving end, to improve accuracy of the MCI. Alternatively, when determining the MCI to be indicated to the terminal device, the network device may not refer to the candidate MCI reported by the terminal device. For example, when determining, based on information such as a current real-time channel condition, MCI better than the candidate MCI, the network device may not refer to the candidate MCI reported by the terminal device. This is not specifically limited in this application.

Optionally, the terminal device may periodically report the candidate MCI, or report the candidate MCI based on event triggering. When the candidate MCI is periodically reported, a reporting period may be determined based on a change speed of the MCI. For example, when the MCI changes rapidly, a short reporting period may be set, or when the MCI changes slowly, a long reporting period may be set.

Optionally, when the first information is the environment information, the terminal device may obtain the environment information by measuring a downlink reference signal and estimating the channel parameter, to obtain the to-be-reported candidate MCI based on the environment information. When the MCI indicated by the network device does not refer to the candidate MCI reported by the terminal device, the network device may obtain the environment information by measuring an uplink reference signal and estimating the channel, to determine, based on the environment information, the MCI to be indicated by the network device.

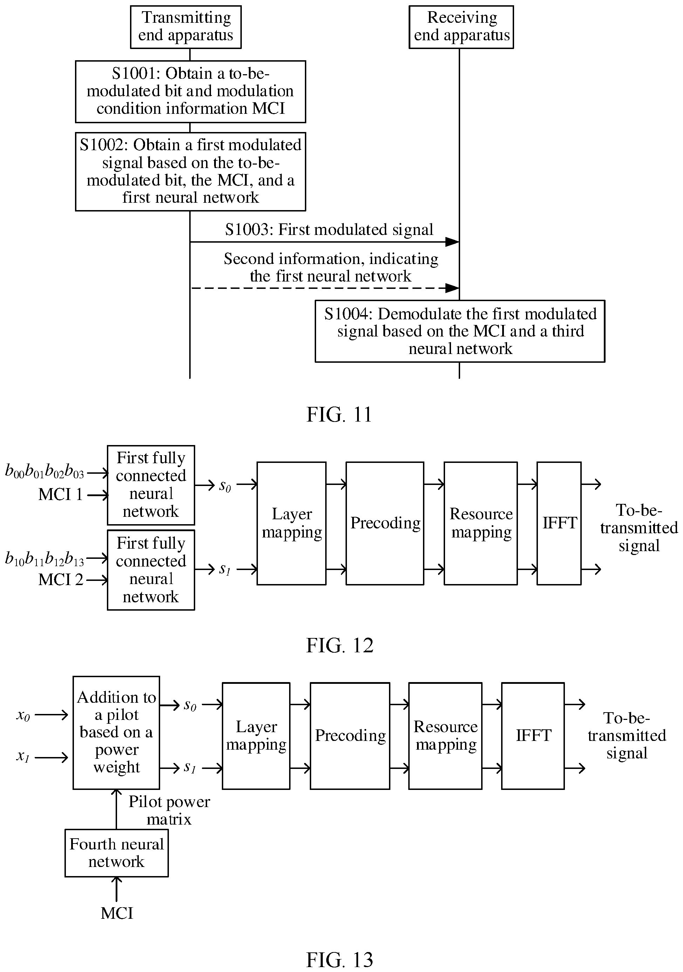

In an implementation, the receiving apparatus may determine the third neural network based on an indication of the transmitting apparatus. In this scenario, as shown in FIG. 11, before step S1004, the method further includes: The transmitting apparatus sends second information to the receiving apparatus. Correspondingly, the receiving apparatus receives the second information from the transmitting apparatus. The second information indicates the first neural network.

In an example, the second information may include a structure parameter and/or a weight parameter of the first neural network. For example, the structure parameter may include a type of the neural network, a related parameter of each layer of the neural network, and the like.

In another example, the transmitting apparatus and the receiving apparatus may agree on a group of known neural networks in advance, and the transmitting apparatus may select one of the group of neural networks as the first neural network. In this scenario, the second information may include an index of the first neural network in the group of neural networks.

Optionally, after receiving the second information, the receiving apparatus may determine the first neural network based on the second information, and perform neural network training based on the first neural network, to obtain the third neural network.

Optionally, the transmitting apparatus may send the second information to the receiving apparatus before performing data exchange with the receiving apparatus. After receiving the second information, the receiving apparatus determines the third neural network (denoted as a third neural network trained for the first time) based on the second information. In subsequent data exchange between the transmitting apparatus and the receiving apparatus, if the first neural network used by the transmitting apparatus remains unchanged, the receiving apparatus may perform demodulation based on the third neural network trained for the first time in each time of data exchange. When the first neural network used by the transmitting apparatus changes, the transmitting apparatus may update the second information and send updated second information to the receiving apparatus, and the receiving apparatus determines the third neural network based on the updated second information.

For example, after determining the first neural network based on the second information, the receiving apparatus may input a bit into the first neural network for modulation, to obtain a modulated signal, and input the modulated signal that passes through a channel into an initial neural network, to obtain an output of the initial neural network. Then, the initial neural network is continuously optimized or trained by minimizing a demodulation loss of the initial neural network, to obtain the third neural network. The demodulation loss of the initial neural network may be a cross entropy of the output of the initial neural network and the input of the first neural network. A process of continuously optimizing or training the initial neural network may also be understood as a process of training a parameter of the third neural network. The channel may be a channel locally simulated by the receiving apparatus.

In another implementation, the transmitting apparatus and the receiving apparatus may agree on a plurality of combinations of first neural networks and corresponding third neural networks in advance. The transmitting apparatus may select one combination from the plurality of combinations, and use a first neural network in the combination. In this scenario, the second information may include an index or an identifier of the combination selected by the transmitting apparatus. For example, the plurality of the combinations of first neural networks and the corresponding third neural networks may be pre-trained by the transmitting apparatus or a third-party apparatus.

Optionally, after receiving the second information, the receiving apparatus may determine the combination selected by the transmitting apparatus, and use a third neural network in the combination.

Based on this solution, the transmitting apparatus sends the second information indicating the first neural network, and the receiving apparatus determines the third neural network based on the second information, so that the receiving apparatus can obtain the third neural network corresponding to the first neural network, to be specific, the receiving apparatus and the transmitting apparatus use a same mapping relationship between a bit and a modulation symbol, so that the receiving apparatus can perform demodulation in a mapping manner at the transmitting end, to improve accuracy of demodulation and improve communication efficiency.

In still another implementation, the first neural network and the third neural network may be jointly trained by the transmitting apparatus or the third-party apparatus. After the training is completed, the third neural network is indicated to the receiving apparatus, for example, a structure parameter and a weight parameter of the third neural network are sent to the receiving apparatus. If the neural network is trained by the third-party apparatus, the third-party apparatus may further indicate the first neural network to the transmitting apparatus.

Optionally, a first modulated signal may be used as an input of the third neural network. The MCI may be used as the input of the third neural network, or some parameters of the third neural network may be obtained based on the MCI. Details are described in subsequent embodiments, and details are not described herein.

In some other embodiments, the first neural network used by the transmitting apparatus may be standardized. For example, the first neural network is defined in a standard, so that the receiving apparatus may learn of the first neural network, and perform processing the same as that of the transmitting apparatus based on the first neural network, to obtain a constellation diagram the same as that of the transmitting apparatus, and then, perform demodulation based on the constellation diagram.

In still some other embodiments, the transmitting apparatus may send the second information to the receiving apparatus. After receiving the second information, the receiving apparatus may determine the first neural network based on the second information, and generate, based on the first neural network, a constellation diagram the same as that of the transmitting apparatus, to perform demodulation based on the constellation diagram.

Optionally, after performing demodulation on the first modulated signal, the receiving apparatus may obtain a log-likelihood ratio (log-likelihood ratio, LLR) sequence. Then, de-interleaving and decoding may be performed on the LLR sequence, to obtain a data bit. After obtaining the data bit, the receiving apparatus may obtain content sent by the transmitting apparatus, to perform corresponding processing based on the content. This is not specifically limited in this application.

The foregoing describes an overall procedure of the data processing method provided in this application. The following describes the first neural network and the third neural network in detail.

For the first neural network, this application provides the following six implementations.

Implementation 1: The first neural network is a first fully connected neural network.

An input of the first fully connected neural network is the to-be-modulated bit(s) and the MCI, and an output of the first fully connected neural network is the first modulated signal.

Optionally, the transmitting apparatus may concatenate the to-be-modulated bit(s) and the MCI to form an input vector, and input the input vector into the first fully connected neural network.

Optionally, the to-be-modulated bit(s) may be grouped into N bit groups based on the modulation order M. For example, when the modulation order is 4, each bit group may include four bits. For example, the bits in each bit group are denoted as $b_{n0}b_{n1}b_{n2}b_{n3}$, $n = 0, 1, ... N-1$.

Optionally, the MCI may include N1 pieces of sub-MCI, where N1 is a positive integer less than or equal to N. For example, the MCI may be represented in a form of a sequence or a vector, and a dimension of the MCI may be $1 \times X$, where $X$ is a positive integer. Dimensions of all of the N1 pieces of sub-MCI included in the MCI are the same, and are all $1 \times X$. The N1 pieces of sub-MCI may be collectively referred to as the MCI.

After the to-be-modulated bit(s) is grouped, the input of the first fully connected neural network may be a bit in an $n^{th}$ bit group in the N bit groups and one of the N1 pieces of sub-MCI. The $n^{th}$ bit group corresponds to an $n^{th}$ first modulation symbol in the N first modulation symbols. In other words, the input of the first fully connected neural network may be one of the N1 pieces of sub-MCI and a bit corresponding to the $n^{th}$ first modulation symbol in the N first modulation symbols. It may be understood that, in this implementation, for different bit groups, sub-MCI used to adjust a mapping relationship between a bit and a modulation symbol may be the same or may be different. When N1 is equal to 1, the sub-MCI is the MCI, and different bit groups correspond to the same sub-MCI.

For example, as shown in FIG. 12, an example in which M is equal to 4 and N is equal to 2 is used. Bits $b_{00}b_{01}b_{02}b_{03}$ in a $0^{th}$ bit group and MCI 1 may be used as the input of the first fully connected neural network, to obtain a $0^{th}$ first modulation symbol $s_o$ included in the first modulated signal. Bits $b_{10}b_{11}b_{12}b_{13}$ in a $1^{st}$ bit group and MCI 2 may be used as the input of the first fully connected neural network, to obtain a $1^{st}$ first modulation symbol $s_1$ included in the first modulated signal.

For example, in the example shown in FIG. 12, the transmitting apparatus may separately process two bit groups by using the first fully connected neural network. For example, after the bits in the $0^{th}$ bit group and the MCI 1 are input into the first fully connected neural network, and the $0^{th}$ first modulation symbol $s_o$ is obtained, the bits in the $1^{st}$ bit group and the MCI 2 are input into the first fully connected neural network, to obtain the $1^{st}$ first modulation symbol $s_1$.

Optionally, the first fully connected neural network may include a plurality of hidden layers. Nonlinear activation functions corresponding to the hidden layers may be the same or may be different. This is not specifically limited in this application. An output layer of the first fully connected neural network may include two neurons, which respectively correspond to a real part and an imaginary part of a modulation symbol.

For example, a relationship between bits in an $n^{th}$ bit group, MCI corresponding to the bit group (MCI that is concatenated with the $n^{th}$ bit group and that is input into the first fully connected neural network), the $n^{th}$ first modulation symbol, and the first fully connected neural network may be expressed in the following form:

$$[r_{n0}, r_{n1}] = f_{\theta_m}(b_{n0}, b_{n1}, \ldots b_{nM-1}, MCI_n), s_n = r_{n0} + jr_{n1} \quad (6)$$

$r_{n0}, r_{n1}$ is the output of the first fully connected neural network, $f_{\theta_m}$ represents the first fully connected neural network, $\theta_m$ is a parameter of the first fully connected neural network, $b_{n0}, b_{n1}, \ldots b_{nM-1}$ is the bits in the nth bit group, $MCI_n$ is the MCI corresponding to the nth bit group, and $r_{n0} + jr_{n1}$ is the nth first modulation symbol $s_n$ in the first modulated signal.

Optionally, after obtaining the first modulated signal, the transmitting apparatus may separately perform layer mapping (layer mapping), precoding (precoding), resource mapping (RE mapping), and IFFT to obtain a to-be-transmitted signal, and send the to-be-transmitted signal. The IFFT may be IFFT in an orthogonal frequency division multiplexing (orthogonal frequency division multiplexing, OFDM) technology. The IFFT may be understood as a specific implementation of waveform shaping, and an output of the IFFT may be a sampling point obtained through upsampling. RE represents a resource element (resource element, RE). During resource mapping, a reference signal is used as an optional parameter. When the reference signal does not participate in resource mapping, time-frequency resources that need to be occupied by the reference signal may be reduced, to improve a throughput.

For example, as shown in FIG. 12, after the first modulation symbol $s_0$ and the first modulation symbol $s_1$ are obtained, layer mapping, precoding, resource mapping, and IFFT may be further performed on $s_0$ and $s_1$ to obtain the to-be-transmitted signal.

Based on Implementation 1, the MCI is used as the input of the first fully connected neural network. When to-be-modulated bit(s)s are the same, different MCI may correspond to different outputs, to be specific, correspond to different constellations and modulation symbols, to implement dynamic adjustment on modulation based on environment information and/or requirement information.

Optionally, when the first neural network is the first fully connected neural network, a structure parameter in second information sent by the transmitting apparatus may include at least one of the following: a quantity of hidden layers of the first fully connected neural network, a quantity of neurons at each hidden layer, and a type of an activation function. A weight parameter may include a weight matrix and/or a bias vector corresponding to each layer.

Implementation 2: The first neural network is a fourth neural network configured to obtain a power weight based on the MCI.

The first modulated signal is obtained by adding at least one second modulation symbol and a pilot based on the power weight. In this application, the pilot may also be referred to as a reference signal, and the pilot and the reference signal may be replaced with each other.

The at least one second modulation symbol is determined based on the to-be-modulated bit(s). For example, the to-be-modulated bit(s) may be modulated based on a conventional constellation diagram to obtain the at least one second modulation symbol. Alternatively, the to-be-modulated bit(s) may be modulated in an implementation similar to Implementation 1 to obtain the at least one second modulation symbol. For example, the at least one second modulation symbol is an output of a second fully connected neural network, and an input of the second fully connected neural network is the to-be-modulated bit(s). Further, the input of the second fully connected neural network may further include the MCI. Refer to related descriptions of Implementation 1. Details are not described herein again.

In other words, the pilot may be superposed on the at least one second modulation symbol in a power superposition manner. Based on this, time-frequency resources occupied by the pilot may be reduced, to be specific, time-frequency resource overheads are reduced.

For example, as shown in FIG. 13, an example in which M is equal to 4 and N is equal to 2 is used. Two second modulation symbols may be obtained based on 2×4 to-be-modulated bit(s)s, and are respectively denoted as $x_0$ and $x_1$. Two first modulation symbols $s_0$ and $s_1$ are obtained by adding the two second modulation symbols and the pilot based on the power weight.

Optionally, the power weight may be determined based on a pilot power matrix. The pilot power matrix may be generated by using the MCI through the fourth neural network. In other words, an input of the fourth neural network is the MCI, and an output of the fourth neural network is the pilot power matrix. For example, the fourth neural network may be a fully connected neural network, a convolutional neural network, a converter neural network, a recurrent neural network, or the like. A type of the fourth neural network is not specifically limited in this application. When the fourth neural network is the fully connected neural network, an activation function of the fully connected neural network may be a sigmoid function. A value range of an output of the sigmoid function is [0, 1]. When the sigmoid function is used as the activation function, a value of the power weight may be limited within [0, 1]. Optionally, the activation function may alternatively be another function. This is not limited in this application.

Optionally, a dimension of the pilot power matrix is the same as a dimension of a time-frequency resource occupied by the to-be-modulated bit(s). For example, if the to-be-modulated bit(s) occupies three OFDM symbols and four subcarriers, the pilot power matrix may be a 3×4 dimensional matrix. A value range of each element in the pilot power matrix may be [0,1].

Optionally, for different channel environments, pilot distribution manners may be different. For example, for a frequency-flat channel whose time domain changes slowly, pilots may be concentrated on some time-frequency resources; and for a frequency-selective channel whose time domain changes rapidly, pilots need to be scattered on more time-frequency resources.

When the pilot is superposed on the at least one second modulation symbol in a power superposition manner, pilot distribution may be determined based on the power weight. The power weight is determined by the pilot power matrix, the pilot power matrix is determined based on the MCI, and the MCI may reflect the channel environment. Therefore, in Implementation 2, dynamic adjustment may be implemented on the pilot power matrix and the power weight based on the channel environment, and optimization is performed on different channel environments, so that pilot distribution better complies with the channel environment, thereby improving demodulation performance.

For example, the first modulated signal, the at least one second modulation symbol, the pilot, and the power weight may satisfy the following relationship:

$$x = \sqrt{1-W} \times s + \sqrt{W} \times p \quad (7)$$

$x$ is the first modulated signal, S is the at least one second modulation symbol, $p$ is the pilot, W is the pilot power matrix, $\sqrt{1-W}$ and $\sqrt{W}$ are power weights, and $1$ represents an all-1 matrix.

Optionally, this solution may also be properly varied to be applicable to a scenario in which the MCI does not exist. When the MCI does not exist, the pilot power matrix may be a default value, and the default value may be generated through a neural network.

Optionally, after obtaining the first modulated signal, the transmitting apparatus may separately perform layer mapping, precoding, resource mapping, IFFT, and the like to obtain a to-be-transmitted signal, and send the to-be-transmitted signal. Because the pilot is superposed on the second modulation symbol in the power superposition manner, independent resource mapping is not performed on the pilot. For other descriptions, refer to related descriptions in Implementation 1. Details are not described herein again.

Optionally, when the fourth neural network is the fully connected neural network, for a structure parameter and a weight parameter in the second information sent by the transmitting apparatus, refer to related descriptions in Implementation 1. Details are not described herein again.

Implementation 3: The first neural network is a first convolutional neural network.

The MCI is used to determine a scaling factor of an output channel of a convolutional layer in the first convolutional neural network. In this application, the scaling factor may also be referred to as a scaling coefficient, and the scaling factor and the scaling coefficient may be replaced with each other.

Optionally, the scaling factor of the output channel of the convolutional layer in the first convolutional neural network may be an output of a fifth neural network, and an input of the fifth neural network may be the MCI. For example, the fifth neural network may be a fully connected neural network, a convolutional neural network, a converter neural network, a recurrent neural network, or the like. A type of the fifth neural network is not specifically limited in this application. When the fifth neural network is the fully connected neural network, an activation function of the fully connected neural network may be, for example, a sigmoid function.

Optionally, the fifth neural network may output a plurality of scaling factors. For example, a quantity of scaling factors output by the fifth neural network may be equal to a quantity of output channels of the convolutional layer in the first convolutional neural network.

When the first convolutional neural network includes a plurality of convolutional layers, in a possible implementation, different convolutional layers may correspond to different MCI and/or different fifth neural networks. For example, assuming that the first convolutional neural network includes a convolutional layer 1 and a convolutional layer 2, MCI 1 may be input into a fifth neural network 1 to obtain a scaling factor of an output channel of the convolutional layer 1, and MCI 2 may be input into a fifth neural network 2 to obtain a scaling factor of an output channel of the convolutional layer 2. The MCI 1 is different from the MCI 2, and/or the fifth neural network 1 is different from the fifth neural network 2. Certainly, MCI corresponding to different convolutional layers may be the same. For example, the MCI 1 and the MCI 2 are the same.

For example, that the fifth neural network 1 is different from the fifth neural network 2 may include: The fifth neural network 1 and the fifth neural network 2 are of different types. For example, the fifth neural network 1 is a fully connected neural network, and the fifth neural network 2 is a convolutional neural network. Alternatively, the fifth neural network 1 and the fifth neural network 2 are of a same type but have different parameters. For example, both the fifth neural network 1 and the fifth neural network 2 are fully connected neural networks, but parameters (for example, activation functions or weights) of the fifth neural network 1 and the fifth neural network 2 are different.

In another possible implementation, one piece of MCI may be input into one fifth neural network, to obtain a scaling factor of each output channel of each of a plurality of convolutional layers included in the first convolutional neural network. For example, assuming that the first convolutional neural network includes two convolutional layers, and each convolutional layer includes three output channels, after the MCI is input into the fifth neural network, the fifth neural network outputs $2\times3$ scaling factors.

Based on this solution, the MCI is introduced to adjust an output of the convolutional layer. When to-be-modulated bit(s)s are the same, different MCI may correspond to different outputs, to be specific, correspond to different constellations and modulation symbols, to implement dynamic adjustment on modulation based on environment information and/or requirement information.

In some embodiments, an input of the first convolutional neural network includes data information, and an output of the first convolutional neural network is the first modulated signal.

In a possible implementation, the data information is the to-be-modulated bit(s). In this scenario, the first convolutional neural network may include M first input channels. An input of an $m^{th}$ first input channel includes an $m^{th}$ bit corresponding to each of the N first modulation symbols, where m=0, 1, ..., and M-1. When the to-be-modulated bit(s) may be grouped into N bit groups, it may be considered that the input of the $m^{th}$ first input channel includes an $m^{th}$ bit in each of the N bit groups.

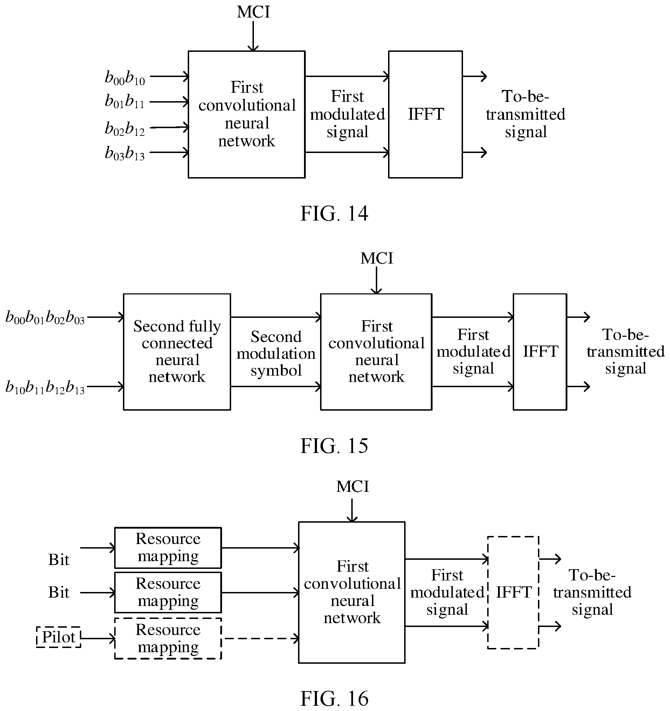

For example, as shown in FIG. 14, an example in which M is equal to 4 and N is equal to 2 is used. In this case, the first convolutional neural network includes four first input channels. It is assumed that bits in a $0^{th}$ bit group are $b_{00}b_{01}b_{02}b_{03}$, and bits in a $1^{st}$ bit group are $b_{10}b_{11}b_{12}b_{13}$. In this case, an input of a $0^{th}$ first input channel may include $b_{00}b_{10}$, an input of a $1^{st}$ first input channel may include $b_{01}b_{11}$, an input of a $2^{nd}$ first input channel may include $b_{02}b_{12}$, and an input of a $3^{rd}$ first input channel may include $b_{03}b_{13}$.

Optionally, a channel size of the first input channel is $1\times N$. The channel size may refer to a dimension of data of an input channel. For example, in the example shown in FIG. 14, the channel size of the first input channel is $1\times2$.

Optionally, the first convolutional neural network may include two output channels, which respectively correspond to a real part and an imaginary part of the first modulation symbol. A channel size of the output channel may be $1\times N$. To be specific, an output of one of the two output channels may include a real part of each of the N first modulation symbols, and an output of the other of the two output channels may include an imaginary part of each of the N first modulation symbols. The N first modulation symbols are first modulation symbols in the first modulated signal.

In another possible implementation, the data information includes at least one second modulation symbol, and the at least one second modulation symbol is determined based on the to-be-modulated bit(s). Refer to related descriptions of the second modulation symbol in Implementation 2. Details are not described herein again.

Optionally, an example in which the at least one second modulation symbol is obtained based on the to-be-modulated bit(s) through a second fully connected neural network, N is equal to 2, and M is equal to 4 is used. As shown in FIG. 15, the to-be-modulated bit(s) may be grouped into two bit groups, each bit group is separately input into the second fully connected neural network to obtain a second modulation symbol corresponding to each bit group, and then the second modulation symbol corresponding to each bit group is input into the first convolutional neural network, to obtain the first modulated signal.

Optionally, an output layer of the second fully connected neural network may include two neurons, which respectively correspond to a real part and an imaginary part of the second modulation symbol.

Optionally, the first convolutional neural network may include two first input channels. An input of one of the two first input channels may include a real part of each of a plurality of second modulation symbols, and an input of the other of the two first input channels may include an imaginary part of each second modulation symbol. In this scenario, a channel size of the first input channel may be $1\times K$, where $K$ is a quantity of second modulation symbols. For example, $K$ may be equal to N. For example, when the at least one second modulation symbol is generated based on the to-be-modulated bit(s) in Implementation 1 or a conventional constellation mapping manner, if the to-be-modulated bit(s) is grouped into N bit groups, N second modulation symbols may be obtained.

Optionally, in this possible implementation, the first convolutional neural network may include two output channels, which respectively correspond to a real part and an imaginary part of the first modulation symbol. For details, refer to related descriptions when the data information is the to-be-modulated bit(s). Details are not described herein again.

Optionally, in addition to the data information, the input of the first convolutional neural network may further include a pilot. For example, the pilot may be an all-1 sequence or a predefined random sequence.

Optionally, the pilot may be used as an input of a second input channel of the first convolutional neural network. A size of the second input channel is the same as the size of the first input channel. For example, when the data information is the to-be-modulated bit(s), and the to-be-modulated bit(s) may be grouped into N bit groups, the channel size of the second input channel may be $1\times N$. When the data information includes the at least one second modulation symbol, an input of one first input channel of the first convolutional neural network includes the real part of each second modulation symbol, and an input of the other first input channel includes the imaginary part of each second modulation symbol, the channel size of the second input channel may be $1\times K$. For a value of K, refer to the foregoing related descriptions. Details are not described herein again.

Based on this solution, the transmitting end introduces the pilot during modulation, to improve demodulation performance of the receiving end through the pilot while implementing dynamic adjustment on modulation, thereby improving communication efficiency.

In some other embodiments, the input of the first convolutional neural network includes the data information, and the output of the first convolutional neural network may be a sampling point obtained through upsampling. In other words, the first convolutional neural network may implement modulation and waveform shaping. Based on this solution, when the first convolutional neural network can further implement waveform shaping, processing steps of the transmitting apparatus may be reduced, complexity of data processing may be reduced, and power consumption may be reduced.

Optionally, in Implementation 3, when the data information is the to-be-modulated bit(s), processing performed by the transmitting apparatus on data may include: The transmitting apparatus first divides the to-be-modulated bit(s) into a three-dimensional matrix of $n_F \times n_T \times (n_{layer} \times n_{mod})$. $n_F$ is a quantity of subcarriers occupied by the to-be-modulated bit(s), $n_T$ is a quantity of OFDM symbols occupied by the to-be-modulated bit(s), $n_{layer}$ is a quantity of data streams, and $n_{mod}$ is a modulation order M. $n_F \times n_T$ may be understood as a quantity of REs occupied by the to-be-modulated bit(s), and the quantity of REs occupied by the to-be-modulated bit(s) is equal to N.

For example, in the example shown in FIG. 14, it may be considered that the quantity $n_{layer}$ of data streams is equal to 1, the modulation order $n_{mod}$ is equal to 4, and $n_F \times n_T$ is equal to 2. That is, the to-be-modulated bit(s) occupies two REs. The two REs may be two OFDM symbols corresponding to a same subcarrier. To be specific, the two REs have a same frequency domain position but different time domain positions. Alternatively, the two REs may be two subcarriers corresponding to a same OFDM symbol. To be specific, the two REs have a same time domain position but different frequency domain positions.

After the three-dimensional matrix of $n_F \times n_T \times (n_{layer} \times n_{mod})$ is obtained, the three-dimensional matrix may be input into the first convolutional neural network, and the output of the convolutional layer in the first convolutional neural network is adjusted based on the MCI, to obtain the first modulated signal or the sampling point obtained through upsampling. Further, the input of the first convolutional neural network may further include a pilot.

For example, when the output of the first convolutional neural network is the first modulated signal, the input of the first convolutional neural network, the MCI, and the output of the first convolutional neural network may be expressed as:

$$S_{n_F \times n_T \times n_{layer} \times 2} = f_{\theta_{M,layer}} \left( B_{n_F \times n_T \times (n_{layer} \times n_{mod})}, MCI \right) \quad (8)$$

$S_{n_F \times n_T \times n_{layer} \times 2}$ represents a real part and an imaginary part of each of the N first modulation symbols included in the first modulated signal. $f_{\theta M,layer}$ represents the first convolutional neural network, $\theta_{M,layer}$ is a parameter of the first convolutional neural network, and the parameter is related to the modulation order and the quantity of data streams. $B_{n_F \times n_T \times (n_{layer} \times n_{mod})}$ represents the three-dimensional matrix of $n_F \times n_T \times (n_{layer} \times n_{mod})$.

Optionally, the transmitting apparatus divides the to-be-modulated bit(s) into the three-dimensional matrix of $n_F \times n_T \times (n_{layer} \times n_{mod})$ based on the quantity of subcarriers, the quantity of OFDM symbols, the quantity of data streams, and the modulation order. This may be understood as resource mapping processing on the to-be-modulated bit(s). Therefore, in Implementation 3, a data processing procedure of the transmitting apparatus may be shown in FIG. 16. To be specific, after performing resource mapping on the to-be-modulated bit(s) and the pilot (optional), the transmitting apparatus obtains, through the first convolutional neural network, the first modulated signal or the sampling point obtained through upsampling on the first modulated signal. IFFT is not performed when the first convolutional neural network outputs the sampling point obtained through upsampling.

Optionally, when the first neural network is the first convolutional neural network, a structure parameter in the second information sent by the transmitting apparatus may include at least one of the following: a quantity of convolutional layers included in the first convolutional neural network, a quantity of channels and a size of a convolution kernel at each convolutional layer, and a type of an activation function. A weight parameter may include a value of each convolution kernel, a bias vector of an output channel, and the like.

Implementation 4: The first neural network is a first converter neural network.

The first converter neural network is configured to generate the first modulated signal based on data information and the MCI. The data information is the to-be-modulated bit(s), or the data information includes at least one second modulation symbol. For details, refer to related descriptions in Implementation 3. Details are not described herein again.

Optionally, the first converter neural network may include a first shared mapping layer, a first interaction layer, and a third shared mapping layer.

In a possible implementation, the first shared mapping layer is configured to obtain, based on the data information, a vector corresponding to the data information. To be specific, an input of the first shared mapping layer is the data information, and an output of the first shared mapping layer is the vector corresponding to the data information. For example, a dimension of the vector corresponding to the data information is higher than a dimension of the data information. For example, the data information is a $1 \times M$ dimensional vector, and the vector corresponding to the data information is a $1 \times P$ dimensional vector, where P is greater than M.

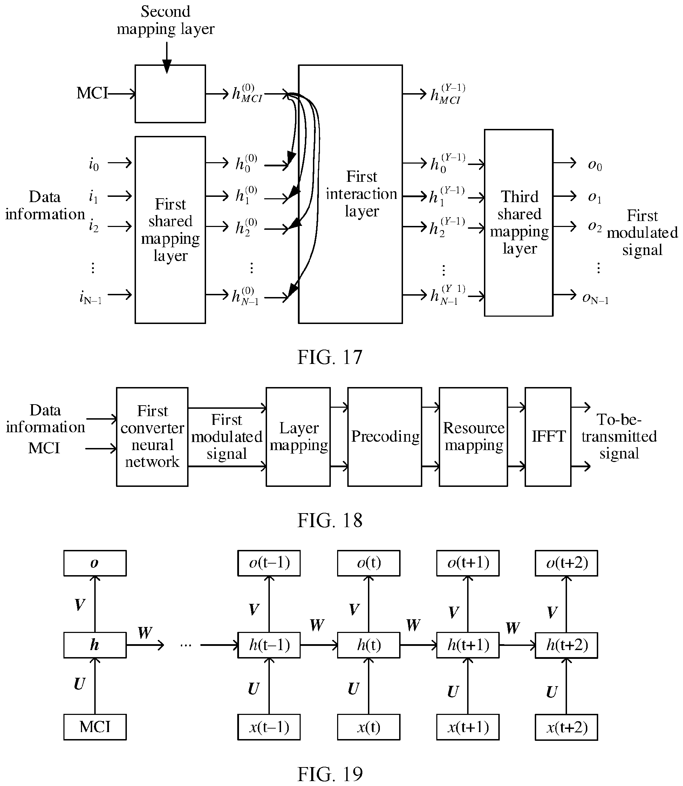

For example, as shown in FIG. 17, when the data information is the to-be-modulated bit(s), and the to-be-modulated bit(s) is grouped into N bit groups, $i_0$ represents a bit in a $0^{th}$ bit group, i, represents a bit in a $1^{st}$ bit group, and by analogy, $i_{N-1}$ represents a bit in an $(N-1)^{th}$ bit group. When the data information includes the at least one second modulation symbol, $i_0$ represents a second modulation symbol corresponding to the $0^{th}$ bit group, i, represents a second modulation symbol corresponding to the $1^{st}$ bit group, and by analogy, $i_{N-1}$ represents a second modulation symbol corresponding to the $(N-1)^{th}$ bit group. A second modulation symbol corresponding to a bit group may be a second modulation symbol obtained based on a bit in the bit group. $h_0^{(0)}$ represents a vector corresponding to $i_0$, $h_1^{(0)}$ represents a vector corresponding to $i_1$, and by analogy, $h_{N-1}^{(0)}$ represents a vector corresponding to $i_{N-1}$.

In a possible implementation, the first interaction layer is configured to obtain a first interaction result based on the vector corresponding to the data information and a vector corresponding to the MCI. The vector corresponding to the MCI is obtained by a second mapping layer based on the MCI. To be specific, an input of the second mapping layer is the MCI, and an output of the second mapping layer is the vector corresponding to the MCI. The second mapping layer and the first shared mapping layer may be the same or may be different. This is not specifically limited in this application.

For example, as shown in FIG. 17, $h_{MCI}^{(0)}$ input into the first interaction layer represents the vector corresponding to the MCI. The first interaction result includes $h_0^{(Y-1)}, h_1^{(Y-1)}, \ldots h_{N-1}^{(Y-1)}$ output by the first interaction layer. For example, output by the first interaction layer is related to each vector input into the interaction layer, $h_1^{(Y-1)}$ output by the first interaction layer is related to each vector input into the interaction layer, and by analogy, $h_{N-1}^{(Y-1)}$ output by the first interaction layer is also related to each vector input into the interaction layer.

Optionally, a structure of each layer at the first interaction layer may be shown in FIG. 5. Certainly, the first interaction layer may alternatively have another structure. This is not specifically limited in this application. This application is described by using an example in which the first interaction layer includes a structure of Y layers in total. Based on this, a superscript (0) in $h_0^{(0)}$, $h_1^{(0)}$, ..., $h_{N-1}^{(0)}$, and $h_{MCI}^{(0)}$ represents a $0^{th}$ layer in the first interaction layer, and a superscript (Y-1) in $h_0^{(Y-1)}, h_1^{(Y-1)}, \ldots h_{N-1}^{(Y-1)}$ represents a $(Y-1)^{th}$ layer in the first interaction layer.

In a possible implementation, the third shared mapping layer is configured to generate the first modulated signal based on the first interaction result. As shown in FIG. 17, an input of the third shared mapping layer is $h_0^{(Y-1)}, h_1^{(Y-1)}, \ldots h_{N-1}^{(Y-1)}$ output by the first interaction layer. $o_0$ output by the third shared mapping layer represents a $0^{th}$ first modulation symbol in the first modulated signal, $o_1$ represents a $1^{st}$ first modulation symbol in the first modulated signal, and by analogy, $o_{N-1}$ represents an $(N-1)^{th}$ first modulation symbol in the first modulated signal.

Optionally, after the first modulated signal is obtained, as shown in FIG. 18, the transmitting apparatus may further separately perform layer mapping, precoding, resource mapping, IFFT, and the like to obtain a to-be-transmitted signal and send the to-be-transmitted signal. Refer to related descriptions in Implementation 1, and details are not described herein again.

Optionally, when the first neural network is the first converter neural network, it may be considered that the first converter neural network is established by the first shared mapping layer, the first interaction layer, and the third shared mapping layer. Therefore, a structure parameter in the second information sent by the transmitting apparatus may include a structure and a parameter of the first shared mapping layer, a structure and a parameter of the first interaction layer, a structure and a parameter of the third shared mapping layer, and a structure and a parameter of the second mapping layer. A weight parameter may include a weight and a bias parameter of the first shared mapping layer, a weight and a bias parameter of the first interaction layer, and a weight and a bias parameter of the third shared mapping layer.

Implementation 5: The first neural network is a first recurrent neural network.

The MCI is used to initialize a hidden state of the first recurrent neural network. An input of the first recurrent neural network is the to-be-modulated bit(s), and an output of the first recurrent neural network is the first modulated signal.

Optionally, the MCI may include a plurality of pieces of sub-MCI. When the to-be-modulated bit(s) is grouped into N bit groups, for each bit group, the first recurrent neural network may be initialized by using sub-MCI corresponding to the bit group, and then a bit in the bit group is input into the first recurrent neural network, to obtain a first modulation symbol corresponding to the bit group.

For example, an example in which M is equal to 4 and N is equal to 2 is used. As shown in FIG. 19, for a bit group n, the first recurrent neural network may be initialized by using one of a plurality of pieces of sub-MCI. Then, a bit 0 of the bit group n is input at a moment t-1, that is, x(t-1) is the bit 0, to obtain an output o(t-1) at the moment t-1; a bit 1 of the bit group n is input at a moment t, that is, x(t) is the bit 1, to obtain an output o(t) at the moment t; a bit 2 of the bit group n is input at a moment t+1, that is, x(t+1) is the bit 2, to obtain an output o(t+1) at the moment t+1; and a bit 3 of the bit group n is input at a moment t+2, that is, x(t+2) is the bit 3, to obtain an output o(t+2) at the moment t+2. Finally, the transmitting apparatus may use the output o(t+2) at the moment t+2 as the first modulation symbol corresponding to the bit group n.

It may be understood that, the input at the moment t-1 further includes an output of a hidden layer at a moment t-2; the input at the moment t further includes an output of the hidden layer at the moment t-1; the input at the moment t+1 further includes an output of the hidden layer at the moment t; and the input at the moment t+2 further includes an output of the hidden layer at the moment t+1. An output of the hidden layer at a former moment may be considered as an internal input of the neural network at a latter moment. A bit in a bit group may be considered as an external input of the neural network.

Optionally, in Implementation 5, after the to-be-modulated bit(s) is grouped, each bit group may include a different quantity of bits. For example, an example in which a total quantity of to-be-modulated bit(s)s is equal to 8 is used. The transmitting apparatus may group the to-be-modulated bit(s)s into three bit groups, and quantities of to-be-modulated bit(s)s included in the three bit groups are respectively 2, 2, and 4. Then, the transmitting apparatus may initialize the first recurrent neural network by using sub-MCI corresponding to each bit group, and then input bits in the bit group into the first recurrent neural network, to obtain a first modulation symbol corresponding to the bit group.

Based on this solution, because each bit group may include a different quantity of bits, modulation of different modulation orders may be implemented for the to-be-modulated bit(s)s, so that modulation flexibility is improved.

Optionally, when the first neural network is the first recurrent neural network, a structure parameter in the second information sent by the transmitting apparatus may include a structure and a parameter of the first recurrent neural network. A weight parameter may include a weight and a bias parameter of each layer in the recurrent neural network.

Implementation 6: The first neural network is a second recurrent neural network.

An input of the second recurrent neural network is the to-be-modulated bit(s) and the MCI, and an output of the second recurrent neural network is the first modulated signal.

Optionally, the MCI may include N2 pieces of sub-MCI, where N2 is a positive integer less than or equal to N. When the to-be-modulated bit(s) is grouped into N bit groups, the input of the second recurrent neural network may be a bit in an $n^{th}$ bit group in the N bit groups and one of the N2 pieces of sub-MCI, where n=0, 1, ..., and N-1. The $n^{th}$ bit group corresponds to an $n^{th}$ first modulation symbol in the N first modulation symbols. In other words, the input of the second recurrent neural network is one of the N2 pieces of sub-MCI and a bit corresponding to the $n^{th}$ first modulation symbol in the N first modulation symbols. When N2 is equal to 1, the sub-MCI is the MCI, and different bit groups correspond to the same sub-MCI.

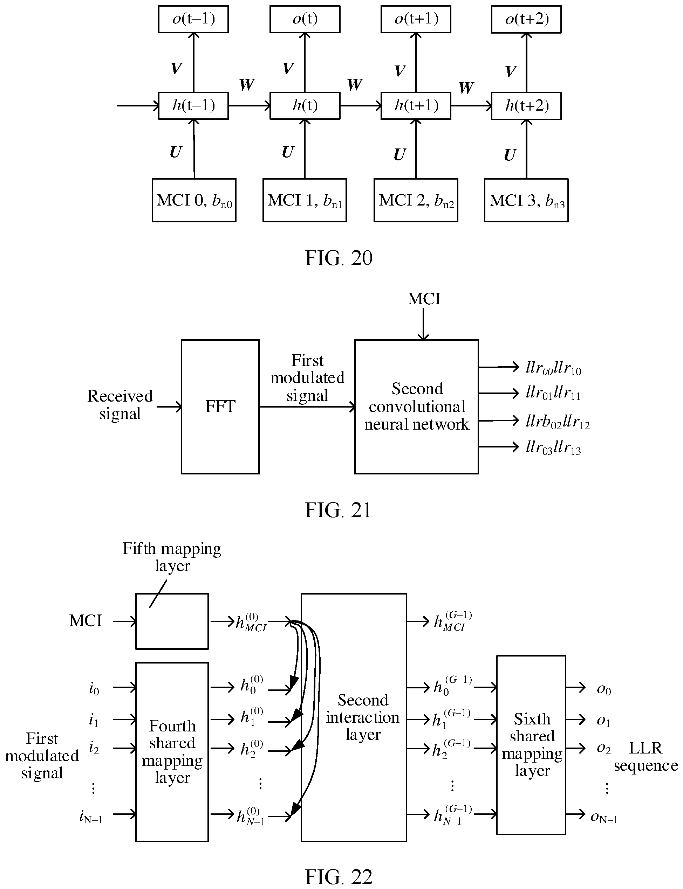

For example, an example in which M is equal to 4 and N is equal to 2 is used. As shown in FIG. 20, for a bit group n, a bit 0 of the bit group n and MCI 0 may be input at a moment t-1, that is, x(t-1) includes the bit 0 and the MCI 0, to obtain an output o(t-1) at the moment t-1; a bit 1 of the bit group n and MCI 1 are input at a moment t, that is, x(t) includes the bit 1 and the MCI 1, to obtain an output o(t) at the moment t; a bit 2 of the bit group n and MCI 2 are input at a moment t+1, that is, x(t+1) includes the bit 2 and the MCI 2, to obtain an output o(t+1) at the moment t+1; and a bit 3 of the bit group n and MCI 3 are input at a moment t+2, that is, x(t+2) includes the bit 3 and the MCI 3, to obtain an output o(t+2) at the moment t+2. Finally, the transmitting apparatus may use the output o(t+2) at the moment t+2 as a first modulation symbol corresponding to the bit group n. The MCI 0, the MCI 1, the MCI 2, and the MCI 3 are sub-MCI included in the MCI. There may be at least two pieces of different MCI in the MCI 0, the MCI 1, the MCI 2, and the MCI 3. Certainly, the MCI 0, the MCI 1, the MCI 2, and the MCI 3 may alternatively be same MCI. It may be understood that, an input at a latter moment in FIG. 20 further includes an output of a hidden layer at a former moment. Refer to related descriptions in FIG. 19, and details are not described herein again.

Optionally, in Implementation 6, after the to-be-modulated bit(s) is grouped, each bit group may include a different quantity of bits. For example, an example in which a total quantity of to-be-modulated bit(s)s is equal to 8 is used. The transmitting apparatus may group the to-be-modulated bit(s)s into three bit groups, and quantities of to-be-modulated bit(s)s included in the three bit groups are respectively 2, 2, and 4. Then, the transmitting apparatus may input sub-MCI corresponding to each bit group and bits in the bit group into the second recurrent neural network, to obtain a first modulation symbol corresponding to the bit group.

Optionally, when the first neural network is the second recurrent neural network, for a structure parameter and a weight parameter in the second information sent by the transmitting apparatus, refer to related descriptions in Implementation 5. Details are not described herein again.

For the third neural network at the receiving end, this application provides the following five implementations.

Implementation 1: The third neural network is a second convolutional neural network.

The MCI is used to determine a scaling factor of an output channel of a convolutional layer in the second convolutional neural network. Optionally, the scaling factor of the output channel of the convolutional layer in the second convolutional neural network may be an output of a fifth neural network, and an input of the fifth neural network is the MCI. For the fifth neural network, refer to related descriptions of the fifth neural network in Implementation 3 of the first neural network. Details are not described herein again.

An input of the second convolutional neural network is the first modulated signal, and an output of the second convolutional neural network may be anLLR sequence. The receiving apparatus may de-interleave and decode the LLR sequence, to obtain a data bit.

Optionally, the second convolutional neural network may include two input channels. An input of one of the two input channels includes real parts of the N first modulation symbols in the first modulated signal, and an input of the other of the two input channels includes imaginary parts of the N first modulation symbols in the first modulated signal.

Optionally, the second convolutional neural network may include M output channels. An output of an $m^{th}$ output channel includes an LLR corresponding to an $m^{th}$ bit in each of N bit groups. For example, an example in which M is equal to 4 and N is equal to 2 is used. As shown in FIG. 21, assuming that bits in a $0^{th}$ bit group are $b_{00}b_{01}b_{02}b_{03}$, and bits in a $1^{st}$ bit group are $b_{10}b_{11}b_{12}b_{13}$, the second convolutional neural network includes four output channels, an output of a $0^{th}$ output channel may include an LLR $llr_{00}llr_{10}$ corresponding to $b_{00}b_{10}$, an output of a $1^{st}$ output channel may include an LLR $llr_{01}llr_{11}$ corresponding to $b_{01}b_{11}$, an output of a $2^{nd}$ output channel may include an LLR$llr_{02}llr_{12}$ corresponding to $b_{02}b_{12}$, and an output of a $3^{rd}$ output channel may include an LLR$llr_{03}llr_{13}$ corresponding to $b_{03}b_{13}$.

Implementation 2: The third neural network is a second converter neural network.

The second converter neural network is configured to generate an LLR sequence based on the first modulated signal and the MCI. The receiving apparatus may de-interleave and decode the LLR sequence, to obtain a data bit.

Optionally, the second converter neural network may include a fourth shared mapping layer, a second interaction layer, and a sixth shared mapping layer.

In a possible implementation, the fourth shared mapping layer is configured to obtain, based on the first modulated signal, a vector corresponding to the first modulated signal. To be specific, an input of the fourth shared mapping layer is the first modulated signal, and an output of the fourth shared mapping layer is the vector corresponding to the first modulated signal.

For example, as shown in FIG. 22, $i_0$ represents a $0^{th}$ first modulation symbol in the first modulated signal, i, represents a $1^{st}$ first modulation symbol in the first modulated signal, and by analogy, $i_{N-1}$ represents an $(N-1)^{th}$ first modulation symbol in the first modulated signal. $h_0^{(0)}$ represents a vector corresponding to $i_0$, $h_1^{(0)}$ represents a vector corresponding to $i_1$, and by analogy, $h_{N-1}^{(0)}$ represents a vector corresponding to $i_{N-1}$. A superscript (0) represents a $0^{th}$ layer in the second interaction layer.

In a possible implementation, the second interaction layer is configured to obtain a second interaction result based on the vector corresponding to the first modulated signal and a vector corresponding to the MCI. The vector corresponding to the MCI is obtained by a fifth mapping layer based on the MCI. To be specific, an input of the fifth mapping layer is the MCI, and an output of the fifth mapping layer is the vector corresponding to the MCI. The fifth mapping layer and the fourth shared mapping layer may be the same or may be different. This is not specifically limited in this application.

For example, as shown in FIG. 22, $h_{MCI}^{(0)}$ input into the second interaction layer represents the vector corresponding to the MCI. The second interaction result includes $h_0^{(G-1)}, h_1^{(G-1)}, \ldots h_{N-1}^{(G-1)}$ output by the second interaction layer. A superscript (G-1) represents a $(G-1)^{th}$ layer in the second interaction layer, and G is a total quantity of layers included in the second interaction layer. For example, $h_0^{(G-1)}$ output by the second interaction layer is related to each vector input into the interaction layer, $h_1^{(G-1)}$ output by the second interaction layer is related to each vector input into the interaction layer, and by analogy, $h_{N-1}^{(G-1)}$ output by the second interaction layer is also related to each vector input into the interaction layer.

In a possible implementation, the sixth shared mapping layer is configured to generate the LLR sequence based on the second interaction result. As shown in FIG. 22, an input of the sixth shared mapping layer is $h_0^{(G-1)}, h_1^{(G-1)}, \ldots h_{N-1}^{(G-1)}$ output by the second interaction layer. An output $o_0$ of the sixth shared mapping layer represents an LLR sequence corresponding to a $0^{th}$ bit group in N bit groups, $o_1$ represents an LLR sequence corresponding to a $1^{st}$ bit group in the N bit groups, and by analogy, $o_{N-1}$ represents an LLR sequence corresponding to an $(N-1)^{th}$ bit group in the N bit groups.

Implementation 3: The third neural network is a third recurrent neural network.

The MCI is used to initialize a hidden state of the third recurrent neural network. An input of the third recurrent neural network is the first modulated signal, and an output of the third recurrent neural network is an LLR sequence.

Optionally, the MCI may include N3 pieces of sub-MCI, where N3 is a positive integer less than or equal to N. When the first modulated signal includes the N first modulation symbols, for each first modulation symbol, the third recurrent neural network may be initialized by using sub-MCI corresponding to the first modulation symbol, and then the first modulation symbol is input into the third recurrent neural network, to obtain an LLR sequence corresponding to the first modulation symbol, where the LLR sequence may include M LLRs. When N3 is equal to 1, the sub-MCI is the MCI, and different first modulation symbols correspond to the same sub-MCI.

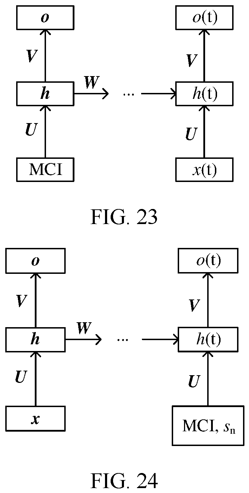

For example, an example in which M is equal to 4 and N is equal to 2 is used. As shown in FIG. 23, for an $n^{th}$ first modulation symbol, the third recurrent neural network may be initialized by using one of a plurality of pieces of sub-MCI. Then, an $n^{th}$ first modulation symbol is input at a moment t (for example, the first modulation symbol is input as a vector), to obtain an output o(t) at the moment t. The output includes an LLR sequence corresponding to the $n^{th}$ first modulation symbol. Alternatively, a real part of the $n^{th}$ first modulation symbol may be input at the moment t, an imaginary part of the $n^{th}$ first modulation symbol may be input at a moment t+1, and an output at the moment t+1 is used as the LLR sequence corresponding to the $n^{th}$ first modulation symbol.

Implementation 4: The third neural network is a fourth recurrent neural network.

An input of the fourth recurrent neural network is the first modulated signal and the MCI, and an output of the fourth recurrent neural network is an LLR sequence.

Optionally, the MCI may include N3 pieces of sub-MCI. When the first modulated signal includes the N first modulation symbols, for each first modulation symbol, the input of the fourth recurrent neural network may be an $n^{th}$ first modulation symbol in the N first modulation symbols and one of the N3 pieces of sub-MCI. The output of the fourth recurrent neural network may be an LLR sequence corresponding to the $n^{th}$ first modulation symbol. n=0, 1, ..., and N-1. When N3 is equal to 1, the sub-MCI is the MCI, and different first modulation symbols correspond to the same sub-MCI.

For example, an example in which M is equal to 4 and N is equal to 2 is used. As shown in FIG. 24, for the $n^{th}$ first modulation symbol, the $n^{th}$ first modulation symbol and one of a plurality of pieces of sub-MCI may be input at a moment t, to obtain an output o(t) at the moment t, where the output includes the LLR sequence corresponding to the $n^{th}$ first modulation symbol.

Implementation 5: The third neural network is a third fully connected neural network.

An input of the third fully connected neural network is the first modulated signal and the MCI, and an output of the third fully connected neural network is an LLR sequence.

Optionally, the receiving apparatus may concatenate the first modulated signal and the MCI to form an input vector, and input the input vector into the third fully connected neural network.

Optionally, the MCI may include N4 pieces of sub-MCI. When the first modulated signal includes the N first modulation symbols, for each first modulation symbol, the input of the third fully connected neural network may be an $n^{th}$ first modulation symbol in the N first modulation symbols and one of the N4 pieces of sub-MCI. The output of the third fully connected neural network may be an LLR sequence corresponding to the $n^{th}$ first modulation symbol. n=0, 1, ..., and N-1. When N4 is equal to 1, the sub-MCI is the MCI, and different first modulation symbols correspond to the same sub-MCI.

The foregoing describes implementations of the first neural network and the third neural network that are provided in this application. It may be understood that, in one time of communication between the transmitting apparatus and the receiving apparatus, the first neural network may use any one of the foregoing six implementations, and the third neural network may use any one of the foregoing five implementations. In other words, a type of the first neural network is decoupled from a type of the third neural network, the type of the first neural network imposes no constraint on the type of the third neural network, and the type of the first neural network and the type of the third neural network may be the same or may be different.

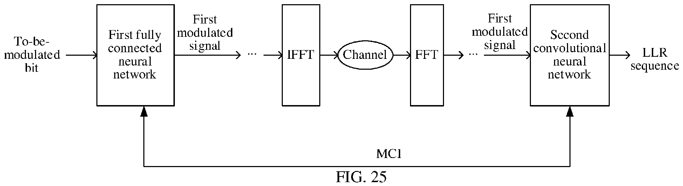

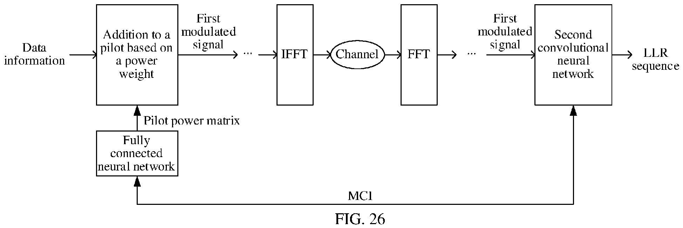

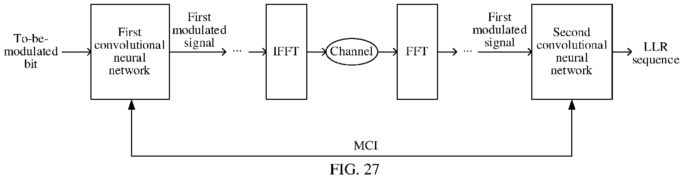

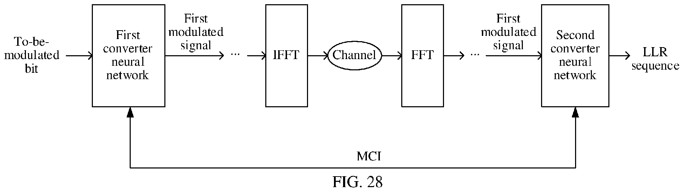

For example, as shown in FIG. 25, the first neural network may be a first fully connected neural network, and the third neural network may be a second convolutional neural network. Alternatively, as shown in FIG. 26, the first neural network may be a fully connected neural network, and the third neural network may be a second convolutional neural network. Alternatively, as shown in FIG. 27, the first neural network may be a first convolutional neural network, and the third neural network may be a second convolutional neural network. Alternatively, as shown in FIG. 28, the first neural network may be a first converter neural network, and the third neural network may be a second converter neural network.

It may be understood that, in the foregoing embodiments, the methods and/or steps implemented by the transmitting apparatus may also be implemented by a component (for example, a processor, a chip, a chip system, a circuit, a logic module, or software such as a chip or a circuit) that can be used in the transmitting apparatus. The method and/or the steps implemented by the receiving apparatus may also be implemented by a component (for example, a processor, a chip, a chip system, a circuit, a logic module, or software such as a chip or a circuit) that can be used in the receiving apparatus.

The foregoing mainly describes the solutions provided in this application from a perspective of interaction between apparatuses. Correspondingly, this application further provides a communication apparatus. The communication apparatus is configured to implement the foregoing methods. The communication apparatus may be the receiving apparatus in the foregoing method embodiments, or a device including the foregoing receiving apparatus, or a component that can be used in the receiving apparatus. Alternatively, the communication apparatus may be the transmitting apparatus in the foregoing method embodiments, or a device including the foregoing transmitting apparatus, or a component that can be used in the transmitting apparatus.

It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

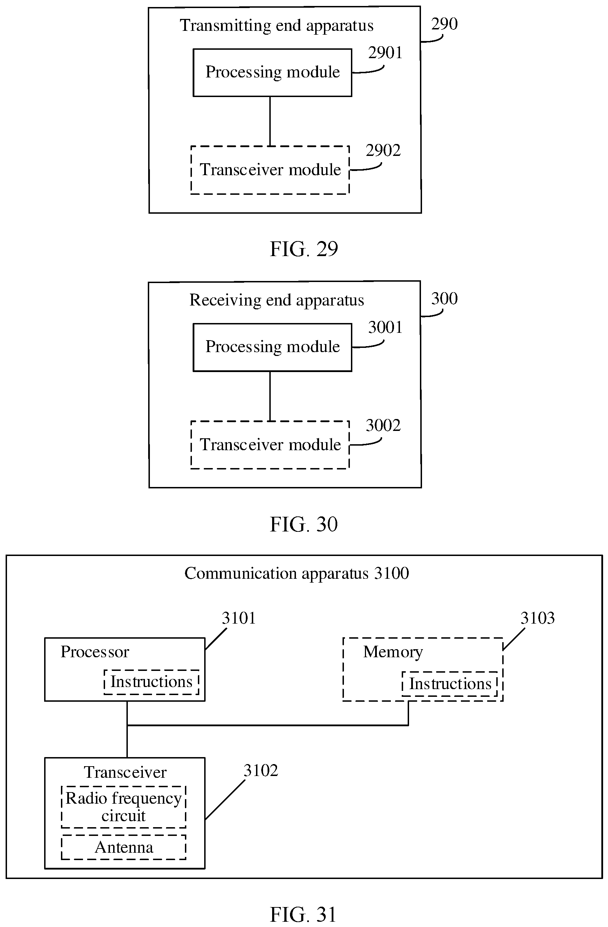

In an implementation scenario, an example in which the communication apparatus is the transmitting apparatus in the foregoing method embodiments is used. FIG. 29 is a diagram of a structure of a transmitting apparatus 290. The transmitting apparatus 290 includes a processing module 2901 and a transceiver module 2902.

In some embodiments, the transmitting apparatus 290 may further include a storage module (not shown in FIG. 29), configured to store program instructions and data.

In some embodiments, the transceiver module 2902 may also be referred to as a transceiver unit, and is configured to implement a transmitting function and/or a receiving function. The transceiver module 2902 may include a transceiver circuit, a transceiver machine, a transceiver, or a communication interface.

In some embodiments, the transceiver module 2902 may include a receiving module and a transmitting module, respectively configured to perform receiving and transmitting steps performed by the transmitting apparatus in the foregoing method embodiments, and/or configured to support another process of the technology described in this specification. The processing module 2901 may be configured to perform processing (for example, determining, obtaining, and generating) steps performed by the transmitting apparatus in the foregoing method embodiments, and/or configured to support another process of the technology described in this specification.

The processing module 2901 is configured to obtain to-be-modulated bit(s) and modulation condition information MCI; the processing module 2901 is further configured to obtain a first modulated signal based on the to-be-modulated bit(s), the MCI, and a first neural network, where the to-be-modulated bit(s) includes $N \times M$ bits, M is a modulation order, and N is a quantity of first modulation symbols included in the first modulated signal; and the processing module 2901 is further configured to output the first modulated signal.

Optionally, the MCI indicates a mapping relationship between a bit and a modulation symbol. Alternatively, the MCI is used to determine a mapping relationship between a bit and a modulation symbol.

Optionally, the MCI is determined based on first information, the first information includes environment information and/or requirement information, the environment information indicates a channel environment, and the requirement information indicates a requirement on communication performance.

Optionally, the environment information includes at least one of the following: a channel response, a channel Doppler spread, a channel delay spread, an equivalent signal-to-noise ratio, a carrier frequency, or a channel quality indicator.

Optionally, that the MCI is determined based on first information includes: the MCI is obtained by quantizing the first information, or the MCI is an output of a second neural network, and an input of the second neural network is the first information.

Optionally, the transceiver module 2902 is configured to send second information, where the second information indicates the first neural network.

Optionally, the second information includes a structure parameter and/or a weight parameter of the first neural network.

Optionally, the first neural network is a first fully connected neural network; and an input of the first fully connected neural network is the to-be-modulated bit(s) and the MCI, and an output of the first fully connected neural network is the first modulated signal.

Optionally, the MCI includes N1 pieces of sub-MCI; and the input of the first fully connected neural network is one of the N1 pieces of sub-MCI and a bit corresponding to an $n^{th}$ first modulation symbol in the N first modulation symbols, where N1 is a positive integer less than or equal to N, and n=0, 1, ..., and N-1.

Optionally, the first neural network is a fourth neural network, and the fourth neural network is configured to obtain a power weight based on the MCI; and the first modulated signal is obtained by adding at least one second modulation symbol and a pilot based on the power weight, and the at least one second modulation symbol is determined based on the to-be-modulated bit(s).

Optionally, the first neural network is a first convolutional neural network, and the MCI is used to determine a scaling factor of an output channel of a convolutional layer in the first convolutional neural network; and an input of the first convolutional neural network includes data information, and an output of the first convolutional neural network is the first modulated signal. The data information is the to-be-modulated bit(s), or the data information includes at least one second modulation symbol, and the at least one second modulation symbol is determined based on the to-be-modulated bit(s).

Optionally, the data information is the to-be-modulated bit(s); and the first convolutional neural network includes M first input channels. An input of an $m^{th}$ first input channel includes an $m^{th}$ bit corresponding to each of the N first modulation symbols, where m=0, 1, ..., and M-1.

Optionally, the input of the first convolutional neural network further includes a pilot.

Optionally, that the MCI is used to determine a scaling factor of an output channel of a convolutional layer in the first convolutional neural network includes: The scaling factor of the output channel of the convolutional layer in the first convolutional neural network is an output of a fifth neural network, and an input of the fifth neural network is the MCI.

Optionally, the first neural network is a first converter neural network; and the first converter neural network is configured to generate the first modulated signal based on data information and the MCI. The data information is the to-be-modulated bit(s), or the data information includes at least one second modulation symbol, and the at least one second modulation symbol is determined based on the to-be-modulated bit(s).

Optionally, the at least one second modulation symbol is an output of a second fully connected neural network, and an input of the second fully connected neural network is the to-be-modulated bit(s).

Optionally, the first neural network is a first recurrent neural network, and the MCI is used to initialize a hidden state of the first recurrent neural network; and an input of the first recurrent neural network is the to-be-modulated bit(s), and an output of the first recurrent neural network is the first modulated signal.

Optionally, the first neural network is a second recurrent neural network; and an input of the second recurrent neural network is the to-be-modulated bit(s) and the MCI, and an output of the second recurrent neural network is the first modulated signal.

Optionally, the MCI includes N2 pieces of sub-MCI. The input of the second recurrent neural network is one of the N2 pieces of sub-MCI and a bit corresponding to an $n^{th}$ first modulation symbol in the N first modulation symbols, where N2 is a positive integer less than or equal to N, and n=0, 1, ..., and N-1.

All related content of the steps in the foregoing method embodiments may be cited in function descriptions of corresponding functional modules, and details are not described herein again.

In this application, the transmitting apparatus 290 is presented in a form of functional modules obtained through integration. The "module" herein may refer to an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the transmitting apparatus 290 may be in a form of the communication apparatus 90 shown in FIG. 9.

In an example, a function/implementation process of the processing module 2901 in FIG. 29 may be implemented via a processor 901 in the communication apparatus 90 shown in FIG. 9 by invoking computer-executable instructions stored in a memory 903, and a function/implementation process of the transceiver module 2902 in FIG. 29 may be implemented via a communication interface 904 in the communication apparatus 90 shown in FIG. 9.

In some embodiments, when the transmitting apparatus 290 in FIG. 29 is a chip or a chip system, a function/implementation process of the transceiver module 2902 may be implemented via an input/output interface (or a communication interface) of the chip or the chip system, and a function/implementation process of the processing module 2901 may be implemented via a chip or a processor (or a processing circuit) of the chip system.

Because the transmitting apparatus 290 provided in this embodiment may perform the foregoing method, for technical effects that can be achieved by the transmitting apparatus 290, refer to the foregoing method embodiments. Details are not described herein again.

In an implementation scenario, an example in which the communication apparatus is the receiving apparatus in the foregoing method embodiments is used. FIG. 30 is a diagram of a structure of a receiving apparatus 300. The receiving apparatus 300 includes a processing module 3001 and a transceiver module 3002.

In some embodiments, the receiving apparatus 300 may further include a storage module (not shown in FIG. 30), configured to store program instructions and data.

In some embodiments, the transceiver module 3002 may also be referred to as a transceiver unit, and is configured to implement a transmitting function and/or a receiving function. The transceiver module 3002 may include a transceiver circuit, a transceiver machine, a transceiver, or a communication interface.

In some embodiments, the transceiver module 3002 may include a receiving module and a transmitting module, respectively configured to perform receiving and transmitting steps performed by the receiving apparatus in the foregoing method embodiments, and/or configured to support another process of the technology described in this specification. The processing module 3001 may be configured to perform processing (for example, determining, obtaining, and generating) steps performed by the receiving apparatus in the foregoing method embodiments, and/or configured to support another process of the technology described in this specification.

The processing module 3001 is configured to obtain a first modulated signal and modulation condition information MCI, where the first modulated signal includes N first modulation symbols, and N is a positive integer; and the processing module 3001 is further configured to demodulate the first modulated signal based on the MCI and a third neural network.

Optionally, the transceiver module 3002 is configured to receive second information, where the second information indicates a first neural network, and the first neural network is configured to generate the first modulated signal; and the processing module 3001 is further configured to determine the third neural network based on the second information.

All related content of the steps in the foregoing method embodiments may be cited in function descriptions of corresponding functional modules, and details are not described herein again.

In this application, the receiving apparatus 300 is presented in a form of functional modules obtained through integration. The "module" herein may refer to an ASIC circuit, a processor and a memory that execute one or more software or firmware programs, an integrated logic circuit, and/or another component that can provide the foregoing functions.

In some embodiments, in hardware implementation, a person skilled in the art may figure out that the receiving apparatus 300 may be in a form of the communication apparatus 90 shown in FIG. 9.

In an example, a function/implementation process of the processing module 3001 in FIG. 30 may be implemented via a processor 901 in the communication apparatus 90 shown in FIG. 9 by invoking computer-executable instructions stored in a memory 903, and a function/implementation process of the transceiver module 3002 in FIG. 30 may be implemented via a communication interface 904 in the communication apparatus 90 shown in FIG. 9.

In some embodiments, when the receiving apparatus 300 in FIG. 30 is a chip or a chip system, a function/implementation process of the transceiver module 3002 may be implemented via an input/output interface (or a communication interface) of the chip or the chip system, and a function/implementation proce ss of the processing module 3001 may be implemented via a chip or a processor (or a processing circuit) of the chip system.

Because the receiving apparatus 300 provided in this embodiment may perform the foregoing method, for technical effects that can be achieved by the receiving apparatus 300, refer to the foregoing method embodiments. Details are not described herein again.

In a possible product form, the transmitting apparatus and the receiving apparatus in embodiments of this application may be further implemented by using the following: one or more field programmable gate arrays (field programmable gate arrays, FPGA), a programmable logic device (programmable logic device, PLD), a controller, a state machine, gate logic, a discrete hardware component, any other suitable circuit, or any combination of circuits that can perform various functions described in this application.

In another possible product form, the transmitting apparatus or the receiving apparatus in embodiments of this application may be implemented by using a general bus architecture. For ease of description, FIG. 31 is a diagram of a structure of a communication apparatus 3100 according to an embodiment of this application. The communication apparatus 3100 includes a processor 3101 and a transceiver 3102. The communication apparatus 3100 may be a first terminal device or a chip in the first terminal device. FIG. 31 shows only main components of the communication apparatus 3100. In addition to the processor 3101 and the transceiver 3102, the communication apparatus may further include a memory 3103 and an input/output apparatus (not shown in the figure).

The processor 3101 is mainly configured to: perform processing on a communication protocol and communication data, control the entire communication apparatus, execute a software program, and process data of the software program. The memory 3103 is mainly configured to store the software program and data. The transceiver 3102 may include a radio frequency circuit and an antenna. The radio frequency circuit is mainly configured to perform conversion between a baseband signal and a radio frequency signal and process the radio frequency signal. The antenna is mainly configured to receive and send the radio frequency signal in an electromagnetic wave form. The input/output apparatus, for example, a touchscreen, a display screen, or a keyboard, is mainly configured to receive data entered by a user and output data to the user.

The processor 3101, the transceiver 3102, and the memory 3103 may be connected via a communication bus.

After the communication apparatus is powered on, the processor 3101 may read the software program in the memory 3103, interpret and execute instructions of the software program, and process the data of the software program.

When data needs to be sent in a wireless manner, after performing baseband processing on the to-be-transmitted data, the processor 3101 outputs a baseband signal to the radio frequency circuit. After performing radio frequency processing on the baseband signal, the radio frequency circuit sends the radio frequency signal in an electromagnetic wave form via the antenna. When the data is sent to the communication apparatus, the radio frequency circuit receives the radio frequency signal via the antenna, converts the radio frequency signal into the baseband signal, and outputs the baseband signal to the processor 3101. The processor 3101 converts the baseband signal into data and processes the data.

In another implementation, the radio frequency circuit and the antenna may be disposed independently of the processor that performs baseband processing. For example, in a distributed scenario, the radio frequency circuit and the antenna may be disposed, in a remote manner, independently of the communication apparatus.

In some embodiments, embodiments of this application further provide a communications apparatus. The communication apparatus includes a processor, configured to implement the method according to any one of the foregoing method embodiments.

In a possible implementation, the communication apparatus further includes a memory. The memory is configured to store necessary program instructions and necessary data. The processor may invoke program code stored in the memory to indicate the communication apparatus to perform the method according to any one of the foregoing method embodiments. Certainly, the memory may not be in the communication apparatus.

In another possible implementation, the communication apparatus further includes an interface circuit. The interface circuit is a code/data read/write interface circuit. The interface circuit is configured to receive computer-executable instructions (where the computer-executable instructions are stored in a memory, and may be directly read from the memory, or may pass through another component), and transmit the computer-executable instructions to the processor.

In still another possible implementation, the communication apparatus further includes a communication interface, and the communication interface is configured to communicate with a module outside the communication apparatus.

It may be understood that, the communication apparatus may be a chip or a chip system. When the communication apparatus is a chip system, the communication apparatus may include a chip, or may include a chip and another discrete component. This is not specifically limited in embodiments of this application.

In some embodiments, embodiments of this application further provide a communication apparatus. The communication apparatus includes an interface circuit and a logic circuit. The interface circuit is configured to input and/or output information. The logic circuit is configured to perform the method according to any one of the foregoing method embodiments, and perform processing based on the input information and/or generate the output information.

When the communication apparatus is configured to implement a function of the transmitting apparatus, in a possible implementation, the output information is a first modulated signal, where the first modulated signal includes N first modulation symbols.

In a possible implementation, the output information is second information, where the second information indicates a first neural network, and the first neural network is configured to generate the first modulated signal. The output information is a modulation symbol.

When the communication apparatus is configured to implement a function of the receiving apparatus, in a possible implementation, input information is a first modulated signal, where the first modulated signal includes N first modulation symbols. The performing processing based on the input information may include: demodulating the first modulated signal based on the MCI and a third neural network.

In a possible implementation, the input information is the second information, where the second information indicates a first neural network, and the first neural network is configured to generate the first modulated signal. The performing processing based on the input information may include: determining the third neural network based on the second information.

This application further provides a computer-readable storage medium. The computer-readable storage medium stores a computer program or instructions. When the computer program or the instructions are executed by a computer, a function of any one of the foregoing method embodiments is implemented.

This application further provides a computer program product. When the computer program product is executed by a computer, a function of any one of the foregoing method embodiments is implemented.

A person of ordinary skill in the art may understand that, for the purpose of convenient and brief descriptions, for a detailed working process of the foregoing system, apparatus, and unit, refer to a corresponding process in the foregoing method embodiments. Details are not described herein again.

It may be understood that, the system, the apparatus, and the method described in this application may also be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate components may or may not be physically separate, that is, may be located in one position, or may be distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireline (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A data processing method, wherein the method comprises:

   obtaining to-be-modulated bit(s) and modulation condition information MCI;
   obtaining a first modulated signal based on the to-be-modulated bit(s), the MCI, and a first neural network, wherein the to-be-modulated bit(s) comprises $N \times M$ bits, M is a modulation order, N is a quantity of first modulation symbols comprised in the first modulated signal, and both N and M are positive integers; and
   outputting the first modulated signal.

2. The method according to claim 1, wherein the MCI indicates a mapping relationship between a bit and a modulation symbol.

3. The method according to claim 1 or 2, wherein the MCI is determined based on first information, the first information comprises environment information and/or requirement information, the environment information indicates a channel environment, and the requirement information indicates a requirement on communication performance.

4. The method according to claim 3, wherein the environment information comprises at least one of the following: a channel response, a channel Doppler spread, a channel delay spread, an equivalent signal-to-noise ratio, a carrier frequency, or a channel quality indicator.

5. The method according to claim 3 or 4, wherein that the MCI is determined based on first information comprises: the MCI is obtained by quantizing the first information, or the MCI is an output of a second neural network, and an input of the second neural network is the first information.

6. The method according to any one of claims 1 to 5, wherein the method further comprises: sending second information, wherein the second information indicates the first neural network.

7. The method according to claim 6, wherein the second information comprises a structure parameter and/or a weight parameter of the first neural network.

8. The method according to any one of claims 1 to 7, wherein the first neural network is a first fully connected neural network; and an input of the first fully connected neural network is the to-be-modulated bit(s) and the MCI, and an output of the first fully connected neural network is the first modulated signal.

9. The method according to claim 8, wherein the MCI comprises N1 pieces of sub-MCI; and the input of the first fully connected neural network is one of the N1 pieces of sub-MCI and a bit corresponding to an $n^{th}$ first modulation symbol in the N first modulation symbols, wherein N1 is a positive integer less than or equal to N, and n=0, 1, ..., and N-1.

10. The method according to any one of claims 1 to 7, wherein the first neural network is a fourth neural network, and the fourth neural network is configured to obtain a power weight based on the MCI; and the first modulated signal is obtained by adding at least one second modulation symbol and a pilot based on the power weight, and the at least one second modulation symbol is determined based on the to-be-modulated bit(s).

11. The method according to any one of claims 1 to 7, wherein the first neural network is a first convolutional neural network, and the MCI is used to determine a scaling factor of an output channel of a convolutional layer in the first convolutional neural network; and an input of the first convolutional neural network comprises data information, and an output of the first convolutional neural network is the first modulated signal; and
the data information is the to-be-modulated bit(s), or the data information comprises at least one second modulation symbol, and the at least one second modulation symbol is determined based on the to-be-modulated bit(s).

12. The method according to claim 11, wherein the data information is the to-be-modulated bit(s); and the first convolutional neural network comprises M first input channels, wherein
an input of an $m^{th}$ first input channel comprises an $m^{th}$ bit corresponding to each of the N first modulation symbols, wherein m=0, 1, ..., and M-1.

13. The method according to claim 11 or 12, wherein the input of the first convolutional neural network further comprises a pilot.

14. The method according to any one of claims 11 to 13, wherein that the MCI is used to determine a scaling factor of an output channel of a convolutional layer in the first convolutional neural network comprises:
the scaling factor of the output channel of the convolutional layer in the first convolutional neural network is an output of a fifth neural network, and an input of the fifth neural network is the MCI.

15. The method according to any one of claims 1 to 7, wherein the first neural network is a first converter neural network; and the first converter neural network is configured to generate the first modulated signal based on data information and the MCI; and
the data information is the to-be-modulated bit(s), or the data information comprises at least one second modulation symbol, and the at least one second modulation symbol is determined based on the to-be-modulated bit(s).

16. The method according to any one of claim 10, 11, or 15, wherein the at least one second modulation symbol is an output of a second fully connected neural network, and an input of the second fully connected neural network is the to-be-modulated bit(s).

17. The method according to any one of claims 1 to 7, wherein the first neural network is a first recurrent neural network, and the MCI is used to initialize a hidden state of the first recurrent neural network; and an input of the first recurrent neural network is the to-be-modulated bit(s), and an output of the first recurrent neural network is the first modulated signal.

18. The method according to any one of claims 1 to 7, wherein the first neural network is a second recurrent neural network; and an input of the second recurrent neural network is the to-be-modulated bit(s) and the MCI, and an output of the second recurrent neural network is the first modulated signal.

19. The method according to claim 18, wherein the MCI comprises N2 pieces of sub-MCI; and
the input of the second recurrent neural network is one of the N2 pieces of sub-MCI and a bit corresponding to an $n^{th}$ first modulation symbol in the N first modulation symbols, wherein N2 is a positive integer less than or equal to N, and n=0, 1, ..., and N-1.

20. A data processing method, wherein the method comprises:

obtaining a first modulated signal and modulation condition information MCI, wherein the first modulated signal comprises N first modulation symbols, and N is a positive integer; and
demodulating the first modulated signal based on the MCI and a third neural network.

21. The method according to claim 20, wherein the MCI is used to adjust a mapping relationship between a bit and a modulation symbol.

22. The method according to claim 20 or 21, wherein the MCI is determined based on first information, the first information comprises environment information and/or requirement information, the environment information indicates a channel environment, and the requirement information indicates a requirement on communication performance.

23. The method according to claim 22, wherein the environment information comprises at least one of the following: a channel response, a channel Doppler spread, a channel delay spread, an equivalent signal-to-noise ratio, a carrier frequency, or a channel quality indicator.

24. The method according to claim 22 or 23, wherein that the MCI is determined based on first information comprises: the MCI is obtained by quantizing the first information, or the MCI is an output of a second neural network, and an input of the second neural network is the first information.

25. The method according to any one of claims 20 to 24, wherein the method further comprises:

receiving second information, wherein the second information indicates a first neural network, and the first neural network is configured to generate the first modulated signal; and
determining the third neural network based on the second information.

26. The method according to claim 25, wherein the second information comprises a structure parameter and/or a weight parameter of the first neural network.

27. The method according to any one of claims 20 to 26, wherein the third neural network is a second convolutional neural network; an input of the second convolutional neural network is the first modulated signal, and an output of the second convolutional neural network is a log-likelihood ratio LLR sequence; and the MCI is used to determine a scaling factor of an output channel of a convolutional layer in the second convolutional neural network.

28. The method according to claim 27, wherein the second convolutional neural network comprises M output channels, wherein an output of an $m^{th}$ output channel comprises an LLR corresponding to an $m^{th}$ bit in each of N bit groups.

29. The method according to any one of claims 20 to 26, wherein the third neural network is a second converter neural network, and the second converter neural network is configured to generate an LLR sequence based on the first modulated signal and the MCI.

30. The method according to claim 29, wherein the second converter neural network comprises a fourth shared mapping layer, a second interaction layer, and a sixth shared mapping layer, wherein
the fourth shared mapping layer is configured to obtain, based on the first modulated signal, a vector corresponding to the first modulated signal; the second interaction layer is configured to obtain a second interaction result based on the vector corresponding to the first modulated signal and a vector corresponding to the MCI; the vector corresponding to the MCI is obtained by a fifth mapping layer based on the MCI; and the sixth shared mapping layer is configured to generate the LLR sequence based on the second interaction result.

31. The method according to any one of claims 20 to 26, wherein the third neural network is a third recurrent neural network, the MCI is used to initialize a hidden state of the third recurrent neural network, an input of the third recurrent neural network is the first modulated signal, and an output of the third recurrent neural network is an LLR sequence.

32. The method according to any one of claims 20 to 26, wherein the third neural network is a fourth recurrent neural network, an input of the fourth recurrent neural network is the first modulated signal and the MCI, and an output of the fourth recurrent neural network is an LLR sequence.

33. A communication apparatus, wherein the communication apparatus comprises a module or a unit configured to perform the method according to any one of claims 1 to 19; or comprises a module or a unit configured to perform the method according to any one of claims 20 to 32.

34. A communication apparatus, wherein the communication apparatus comprises at least one processor, wherein the processor is configured to execute a computer program or instructions, to enable the communication apparatus to perform the method according to any one of claims 1 to 19, or enable the communication apparatus to perform the method according to any one of claims 20 to 32.

35. A communication apparatus, wherein the communication apparatus comprises a logic circuit and an interface circuit, wherein

the interface circuit is configured to input and/or output information; and
the logic circuit is configured to perform the method according to any one of claims 1 to 19, or configured to perform the method according to any one of claims 20 to 32, and perform processing based on the information input by the interface circuit and/or generate the information output by the interface circuit.

36. A computer-readable storage medium, wherein the computer-readable storage medium stores a computer program or instructions; and when the computer program or the instructions are executed by a communication apparatus, the method according to any one of claims 1 to 19 is implemented or the method according to any one of claims 20 to 32 is implemented.

37. A computer program product, wherein when the computer program product runs on a communication apparatus, the method according to any one of claims 1 to 19 is implemented or the method according to any one of claims 20 to 32 is implemented.

38. A communication system, comprising an apparatus configured to perform the method according to any one of claims 1 to 19 and an apparatus configured to perform the method according to any one of claims 20 to 32.

Constellation diagram

Bit — Modulation symbol — Reference signal — Frame — To-be-transmitted signal

Channel coding → Constellation mapping → Resource mapping → Waveform →

Soft bit — Modulation symbol — Frame — Received signal

Channel decoding ← Constellation demapping ← Equalization ← Waveform ←

Channel ↑ — Reference signal

Channel estimation

FIG. 1

Input layer — Hidden layer — Output layer

$x_1$
$x_2$
$x_3$
$x_4$

$y_1$
$y_2$
$y_3$
$y_4$
$y_5$
$y_6$

FIG. 2

Convolution kernel

Input channel

Output channel

$*$
$*$

$+$

$*$
$*$

$+$

$*$
$*$

$+$

FIG. 3

$o$

$V$

$h$        $W$

$U$

$x$

$o(t-1)$            $o(t)$            $o(t+1)$

$V$        $W$   $V$        $W$   $V$        $W$

$h(t-1)$            $h(t)$            $h(t+1)$

$U$            $U$            $U$

$x(t-1)$            $x(t)$            $x(t+1)$

FIG. 4

FIG. 5

FIG. 6

FIG. 7

FIG. 8

FIG. 9

FIG. 10

```
┌─────────────┐                          ┌─────────────┐
│Transmitting │                          │ Receiving   │
│end apparatus│                          │end apparatus│
└─────────────┘                          └─────────────┘
```

S1001: Obtain a to-be-modulated bit and modulation condition information MCI

S1002: Obtain a first modulated signal based on the to-be-modulated bit, the MCI, and a first neural network

S1003: First modulated signal

Second information, indicating the first neural network

S1004: Demodulate the first modulated signal based on the MCI and a third neural network

FIG. 11

$b_{00}b_{01}b_{02}b_{03}$ →
MCI 1 → First fully connected neural network → $s_0$ →

$b_{10}b_{11}b_{12}b_{13}$ →
MCI 2 → First fully connected neural network → $s_1$ →

Layer mapping → Precoding → Resource mapping → IFFT → To-be-transmitted signal

FIG. 12

$x_0$ →
$x_1$ → Addition to a pilot based on a power weight → $s_0$ → $s_1$ →

Layer mapping → Precoding → Resource mapping → IFFT → To-be-transmitted signal

Pilot power matrix

Fourth neural network

MCI

FIG. 13

MCI

$b_{00}b_{10}$ ⟶
$b_{01}b_{11}$ ⟶
$b_{02}b_{12}$ ⟶
$b_{03}b_{13}$ ⟶

First convolutional neural network

First modulated signal

IFFT

To-be-transmitted signal

FIG. 14

MCI

$b_{00}b_{01}b_{02}b_{03}$ ⟶

$b_{10}b_{11}b_{12}b_{13}$ ⟶

Second fully connected neural network

Second modulation symbol

First convolutional neural network

First modulated signal

IFFT

To-be-transmitted signal

FIG. 15

MCI

Bit ⟶ Resource mapping

Bit ⟶ Resource mapping

Pilot ⟶ Resource mapping

First convolutional neural network

First modulated signal

IFFT

To-be-transmitted signal

FIG. 16

FIG. 17

FIG. 18

FIG. 19

FIG. 20

FIG. 21

FIG. 22

FIG. 23

FIG. 24

To-be-modulated bit → First fully connected neural network → First modulated signal ⋯ → IFFT → Channel → FFT → ⋯ First modulated signal → Second convolutional neural network → LLR sequence

MCI

FIG. 25

Data information → Addition to a pilot based on a power weight → First modulated signal → ... → IFFT → Channel → FFT → ... → First modulated signal → Second convolutional neural network → LLR sequence

Fully connected neural network → Pilot power matrix

MCI

FIG. 26

FIG. 27

To-be-modulated bit → First converter neural network → First modulated signal → ⋯ → IFFT → Channel → FFT → ⋯ → First modulated signal → Second converter neural network → LLR sequence

MCI

FIG. 28

Transmitting end apparatus 290

Processing module 2901

Transceiver module 2902

FIG. 29

Receiving end apparatus 300

Processing module 3001

Transceiver module 3002

FIG. 30

Communication apparatus 3100

Processor 3101

Instructions

Memory 3103

Instructions

Transceiver 3102

Radio frequency circuit

Antenna

FIG. 31

<table>
<tr><td colspan="2">INTERNATIONAL SEARCH REPORT</td><td colspan="2">International application No.<br>**PCT/CN2023/084206**</td></tr>
</table>

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, CNABS, VEN, ENTXT, 3GPP, CJFD, IEEE: 调制, 解调, 比特, 符号, 条件, 神经, 网络, 信道, 参数, modulate, demodulate, bit, symbol, condition, neural, network, channel, parameter

**C. DOCUMENTS CONSIDERED TO BE RELEVANT**

| Category* | Citation of document, with indication, where appropriate, of the relevant passages | Relevant to claim No. |
|---|---|---|
| X | CN 112328398 A (TSINGHUA UNIVERSITY) 05 February 2021 (2021-02-05) description, paragraphs [0001]-[0060] and [0128]-[0132] | 1, 6-8, 33-38 |
| A | CN 112328398 A (TSINGHUA UNIVERSITY) 05 February 2021 (2021-02-05) entire document | 2-5, 9-19 |
| X | CN 109672639 A (HARBIN INSTITUTE OF TECHNOLOGY) 23 April 2019 (2019-04-23) description, paragraphs [0001]-[0020] | 20, 25-26, 33-38 |
| A | CN 109672639 A (HARBIN INSTITUTE OF TECHNOLOGY) 23 April 2019 (2019-04-23) entire document | 21-24, 27-32 |
| A | CN 114070684 A (SOUTHWEST JIAOTONG UNIVERSITY) 18 February 2022 (2022-02-18) entire document | 1-38 |
| A | US 2019370653 A1 (CHAKRABARTTY, S. et al.) 05 December 2019 (2019-12-05) entire document | 1-38 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 July 2023** | **06 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/084206**

| Patent document cited in search report | | | Publication date (day/month/year) | Patent family member(s) | | | Publication date (day/month/year) |
|---|---|---|---|---|---|---|---|
| CN | 112328398 | A | 05 February 2021 | None | | | |
| CN | 109672639 | A | 23 April 2019 | None | | | |
| CN | 114070684 | A | 18 February 2022 | None | | | |
| US | 2019370653 | A1 | 05 December 2019 | WO | 2018098257 | A1 | 31 May 2018 |

Form PCT/ISA/210 (patent family annex) (July 2022)

**REFERENCES CITED IN THE DESCRIPTION**

**Patent documents cited in the description**

- CN 202210335881